(19) Europäisches Patentamt
European Patent Office
Office européen des brevets

(11) **EP 2 051 462 B1**

(12) **EUROPÄISCHE PATENTSCHRIFT**

(45) Veröffentlichungstag und Bekanntmachung des Hinweises auf die Patenterteilung:
**03.09.2014  Patentblatt 2014/36**

(51) Int Cl.:
*H04L 1/06* (2006.01)    *H04L 25/02* (2006.01)
*H04L 25/03* (2006.01)

(21) Anmeldenummer: **08016204.3**

(22) Anmeldetag: **15.09.2008**

(54) **Verfahren und Vorrichtung zur Detektion von Sendesignalen in einer Multi-Layer-Übertragung**

Device and method for detecting transmit signals in a multi-layer transmission

Procédé et dispositif de détection de signaux d'émission dans une transmission multicouches

(84) Benannte Vertragsstaaten:
**DE ES FR IT NO**

(30) Priorität: **15.10.2007   DE 102007049398**
**13.12.2007   DE 102007060015**

(43) Veröffentlichungstag der Anmeldung:
**22.04.2009   Patentblatt 2009/17**

(73) Patentinhaber: **Rohde & Schwarz GmbH & Co. KG**
**81671 München (DE)**

(72) Erfinder: **Detert, Thorben**
**80634 München (DE)**

(74) Vertreter: **Körfer, Thomas et al**
**Mitscherlich PartmbB**
**Patent- und Rechtsanwälte**
**Sonnenstrasse 33**
**80331 München (DE)**

(56) Entgegenhaltungen:
**WO-A1-2007/037716    US-B2- 8 279 954**

- **THORBEN DETERT ED - UMALI E M ET AL: "An Efficient Fixed Complexity QRD-M Algorithm for MIMO-OFDM using Per-Survivor Slicing", WIRELESS COMMUNICATION SYSTEMS, 2007. ISWCS 2007. 4TH INTERNATIONAL SYMPOSIUM ON, IEEE, PISCATAWAY, NJ, USA, 1. Oktober 2007 (2007-10-01), Seiten 572-576, XP031166834, ISBN: 978-1-4244-0978-5**

- **WÜBBEN D ET AL: "Efficient algorithm for decoding layered space-time codes", ELECTRONICS LETTERS, IEE STEVENAGE, GB, Bd. 37, Nr. 22, 25. Oktober 2001 (2001-10-25), Seiten 1348-1350, XP006017406, ISSN: 0013-5194, DOI: 10.1049/EL:20010899**
- **DAVID L MILLINER ET AL: "A layer-adaptive M algorithm for multiple-input multiple-output channel detection", SIGNAL PROCESSING ADVANCES IN WIRELESS COMMUNICATIONS, 2007 - SPAWC 2007 - IEEE 8TH WORKSHOP ON, IEEE, XX, 1. Juni 2007 (2007-06-01), Seiten 1-5, XP031189403, ISBN: 978-1-4244-0954-9**
- **LEON GOR ET AL: "Power Reduction through Upper Triangular Matrix Tracking in QR Detection MIMO Receivers", 2006 IEEE 64TH VEHICULAR TECHNOLOGY CONFERENCE : VTC 2006-FALL ; 25 - 28 SEPTEMBER 2006, MONTREAL, QUEBEC, CANADA, PISCATAWAY, NJ : IEEE OPERATIONS CENTER, 1. September 2006 (2006-09-01), Seiten 1-5, XP031051354, ISBN: 978-1-4244-0062-1**
- **KAVCIC A ET AL: "Equal-Diagonal QR Decomposition and its Application to Precoder Design for Successive-Cancellation Detection", IEEE TRANSACTIONS ON INFORMATION THEORY, IEEE PRESS, USA, Bd. 51, Nr. 1, 1. Januar 2005 (2005-01-01) , Seiten 154-172, XP011124784, ISSN: 0018-9448, DOI: 10.1109/TIT. 2004.842677**
- **HOIYOON JUNG ET AL: "Efficient Transmit Strategy Using a Fraction of Feedback for QRD Based V-BLAST Systems", VEHICULAR TECHNOLOGY CONFERENCE, 2007. VTC-2007 FALL. 2007 IEEE 66TH, IEEE, PI, 1. September 2007 (2007-09-01), Seiten 387-391, XP031147431, ISBN: 978-1-4244-0263-2**

• Chitranjan K. Singh et al: "VLSI Architecture for Matrix Inversion using Modified Gram-Schmidt based QR Decomposition", University of Texas at Dallas , 6. Januar 2007 (2007-01-06), Seiten 1-6, XP002692316, Gefunden im Internet: URL:http://ieeexplore.ieee.org/stamp/stamp .jsp?tp=&arnumber=4092145 [gefunden am 2013-02-06]

**Beschreibung**

Die Erfindung betrifft ein Verfahren und eine Vorrichtung zur Detektion von Sendesignalen in einer Multi-Layer-Übertragung.

Zukünftige multimediale Anwendungen in der Kommunikationstechnik erfordern zunehmend eine Erhöhung der Datenrate. Die Bewältigung dieses hohen Datenaufkommens erfolgt zukünftig durch Mehrantennen-Systeme, die die räumliche Trennung von Übertragungssignalen ermöglichen und somit die parallele Übertragung mehrerer Datenströme im gleichen Frequenzband oder den räumlichen Vielfachzugriff auf das Übertragungsmedium (sogenanntes Space-Division-Multiple-Access (SDMA)) erlauben.

Bei der parallelen Übertragung mehrerer Datenströme zur gleichen Zeit und im gleichen Frequenzband in einem Multi-Layer-Übertragungssystem - beispielsweise im V-Blast-Übertragungssystem (Bell-Labs-Layered-Space-Time-Vertical-Encoding) - wird das zu übertragende Datenvolumen auf mehrere Datenströme aufgeteilt, die jeweils einer der insgesamt $N_t$ Sendeantennen zugeführt werden. Die $N_t$ verschiedenen Datenströme, die jeweils von einer der $N_t$ Sendeantennen abgestrahlt werden, überlagern sich in den insgesamt $N_r$ Datenströmen, die jeweils von einer der $N_r$ Empfangsantennen empfangen werden.

Diese Überlagerung der einzelnen Sendesignale in jedem der einzelnen Empfangssignale lässt sich mit der zeitlichen Überlagerung von Datensymbolen in einem Empfangssignal bei Intersymbol-Interferenz (ISI) behafteten Übertragungskanälen vergleichen. Analog zur Kanalschätzung und darauf aufbauenden zeitlichen Entzerrung mithilfe eines Sequenzschätzers im Fall von Intersymbol-Interferenz (ISI) behafteten Übertragungskanälen ist in einem Multi-Layer-Übertragungssystem eine Schätzung der insgesamt $N_t \cdot N_r$ Übertragungskanäle zwischen den $N_t$ Sendeantennen und den $N_r$ Empfangsantennen und eine darauf aufbauende räumliche Entzerrung der von den insgesamt $N_t$ Sendeantennen in den $N_t$ Layern jeweils übertragenen Datenströmen erforderlich.

Analog zur zeitlichen Entzerrung stellt der Maximum-Likelihood-Sequence-Estimator (MLSE), der beispielsweise in der EP 1 246 418 A2 beschrieben ist und die euklidische Distanz zwischen dem Vektor der Empfangssignale $\underline{r}$ und dem mit der Übertragungsmatrix $H$ gewichteten Vektor aller möglichen Hypothesen $\underline{\tilde{s}}$ der Sendesignale $\underline{s}$ ermittelt, den derzeit besten Detektor dar.

Bei einer effizienten Berechnung des Maximum-Likelihood-Sequence-Estimators mithilfe des Viterbi-Algorithmuses sind hierzu bei einer Mächtigkeit $|S|$ des verwendeten

Modulationsalphabets $S$ insgesamt $|S|^{N_t}$ euklidische Distanzen bzw. Zweige im Trellis-Diagramm sowie insgesamt $|S|^{N_t-1}$ Zustände zu berechnen, was in Echtzeit auch bei einer geringen Anzahl $N_t$ von Sendeantennen nicht möglich ist.

Aufgabe der Erfindung ist es deshalb, ein Verfahren und eine Vorrichtung zur räumlichen Entzerrung von mehreren, in mehreren Empfangssignalen überlagerten Sendesignalen in einer Multi-Layer-Übertragung zu schaffen, das bzw. die einen deutlich geringeren Verarbeitungsaufwand gegenüber dem Maximum-Likelihood-Sequence-Estimator bei Verwendung des Viterbi-Algorithmuses aufweist, ohne wesentliche Einbussen in der Qualität des Detektionsergebnisses zu erleiden.

Die Aufgabe wird bezüglich des Verfahrens durch die Merkmale des Anspruchs 1 und bezüglich der Vorrichtung durch die Merkmale des Anspruchs 9 gelöst. Die Unteransprüche betreffen vorteilhafte Weiterbildungen.

Erfindungsgemäß wird hierzu die Übertragungsmatrix $H$ der Multi-Layer-Übertragung im Rahmen einer $Q \cdot R$-Zerlegung in eine orthogonale Matrix $Q^H$ und eine Dreiecksmatrix $R$ zerlegt. Wird auf dieser Basis der Empfangssignalvektor $\underline{r}$ in einem Vorfilter mit einer Vorfiltermatrix, die der orthogonalen Matrix $Q^H$ entspricht, gefiltert und im Sinne des Maximum-Likelihood-Ansatzes eine Metrik gebildet, in der alle möglichen mit der oberen Dreiecksmatrix $R$ gewichteten Hypothesen $\underline{\tilde{s}}$ des Sendesignalvektors $\underline{s}$ vom vorgefilterten Empfangssignalvektor $Q^H \cdot \underline{r}$ subtrahiert werden. So kann durch Variation des Sendesignalvektors $\underline{s}$ über alle möglichen Hypothesen $\underline{\tilde{s}}$ eine minimale Metrik bei einer Hypothese $\underline{\tilde{s}}$ des Sendesignalvektors $\underline{s}$ ermittelt werden, die den besten Schätzwert $\underline{\hat{s}}$ für den Sendesignalvektor $\underline{s}$ darstellt.

Die erfindungsgemäße Schätzung des Sendesignalvektors $\underline{s}$ mittels erfindungsgemäßer Metrik-Berechnung weist gegenüber einer Schätzung mit einem nach dem Minimum-Mean-Square-Error-Kriterium oder dem Zero-Forcing-Verfahren optimierten Vorfilter den Vorteil auf, dass keine komplexe Matrixinversion der Übertragungsmatrix $H$ erforderlich ist, da die einzelnen Zeilen der Metrik separat für sich und sukzessive beginnend mit untersten Zeile zur Bestimmung des Sendesignals $s_{N_t}$ im $N_t$-ten Layer bis zur obersten Zeile zur Bestimmung des Sendesignals $s_1$ im ersten Layer minimiert werden können.

Da bei kleinen Werten des Diagonalelements $R_{k,k}$ in der $k$-ten Zeile der Dreiecksmatrix $R$ das Produkt $R_{k,k} \cdot \tilde{s}_k^{(\alpha)}$ für alle Hypothesen $\tilde{s}_k^{(\alpha)}$ mit $\alpha = 1,...,|S|^{N_t}$ des Sendesignals $s_k$ im $k$-ten Layer klein ist und sich somit alle Zweigmetriken im Trellis- oder Baum-Diagramm zur Bestimmung des Sendesignals $s_k$ im $k$-ten Layer nur geringfügig unterscheiden, wird ein Sequenzschätzer sehr leicht einen falschen Pfad ermitteln und damit einen falschen Schätzwert $\hat{s}_k$ für das Sendesignal $s_k$ im $k$-ten Layer detektieren. Da sich das Diagonalelement $R_{k,k}$ in der $k$-ten Zeile der Dreiecksmatrix $R$

nach dem modifizierten Gram-Schmidt-Verfahren zur Durchführung der $Q \cdot R$-Zerlegung aus der Norm $\|\underline{h}_k\|$ des k -ten Spaltenvektors $\underline{h}_k$ der Übertragungsmatrix $H$ berechnet, wie weiter unten im Detail noch gezeigt wird, wird die Übertragungsmatrix $H$ erfindungsgemäß zu einer erweiterten Übertragungsmatrix $\overline{H}$ mit verlängerten Spaltenvektoren $\overline{\underline{h}}_i$ erweitert, die in einer ihren Verlängerungskoordinaten mit einem frei wählbaren Faktor $\sqrt{\eta}$ besetzt sind und somit eine höhere

Spaltennormen $\|\overline{\underline{h}}_i\|$ gegenüber den Spaltenvektoren $\underline{h}_i$ der bisherigen Übertragungsmatrix $H$ aufweisen.

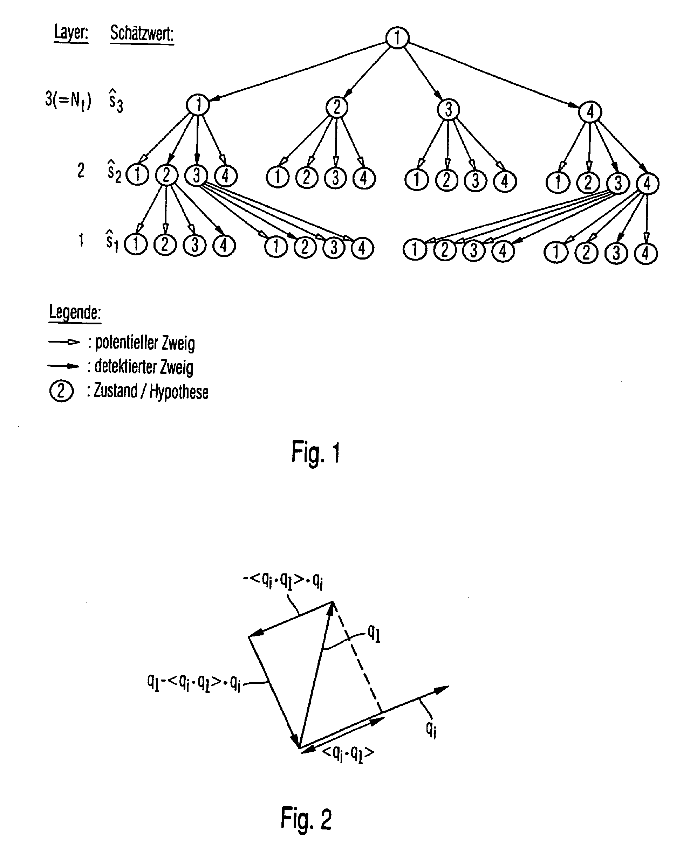

Bei der Minimierung der erfindungsgemäßen Metrik im Trellis-Diagramm kann bevorzugt der auf der $Q \cdot R$-Zerlegung der Übertragungsmatrix $H$ und dem $M$-Algorithmus basierende QRD-M-Algorithmus benutzt werden, bei dem gemäß Fig. 1 ausgehend vom Layer $N_t$=3 die insgesamt $M$=4 Hypothesen $\tilde{s}_{Nt}^{(\alpha)}$ des Sendesignals $s_{Nt}$ im $N_t$-ten Layer als Überlebenspfade ausgewählt werden, deren Zweigmetriken entsprechend der Zeilenmetrik in der $N_t$-ten Zeile der erfindungsgemäßen Metrik minimal sind. Die Überlebenspfade werden im nächsten Layer $N_t$-1=2 ausgehend von den insgesamt $M$=4 ausgewählten Hypothesen $\tilde{s}_{Nt}^{(\alpha)}$ des *Sendesignals* $s_{Nt}$ im $N_t$-ten Layer um diejenigen insgesamt M=4 Hypothesen $\tilde{s}_{Nt\text{-}1}^{(\alpha)}$ des Sendesignals $s_{Nt\text{-}1}$ im $N_t$-1-ten Layer verlängert, deren Zweigmetriken entsprechend der Zeilenmetrik in der $N_t$-1-ten Zeile der erfindungsgemäßen Metrik in Summe mit den Zweigmetriken der insgesamt $M$=4 ausgewählten Hypothesen $\tilde{s}_{Nt}^{(\alpha)}$ des Sendesignals $s_{Nt}$ im $N_t$-ten Layer minimal sind.

Auf diese Weise werden in jedem der nächst niedrigeren Layer $i$ jeweils $M$ Hypothesen $\tilde{s}_i^{(\alpha)}$ des Sendesignals $s_i$ im $i$-ten Layer ausgewählt und zu den insgesamt $M$ Überlebenspfaden mit jeweils minimaler Pfadmetrik erweitert.

Neben der erfindungsgemäßen Erhöhung der Diagonalelemente $R_{i,i}$ der Dreiecksmatrix R durch Erweiterung der Übertragungsmatrix H zur erweiterten Übertragungsmatrix $\overline{H}$ mit höheren Spaltennormen $\|\overline{\underline{h}}_i\|$ der Spaltenvektoren $\overline{\underline{h}}_i$ werden die Spaltenvektoren $\overline{\underline{q}}_i$ der erweiterten zu orthogonale Matrix $\overline{Q}$ hinsichtlich ihrer Spaltennorm $\|\overline{\underline{q}}_i\|$ derart mit einem sortierten Gram-Schmidt-Verfahren sortiert, dass eine erweiterte und sortierte orthogonale Matrix $\overline{Q}_S$ entsteht, deren niedrigster Spaltenvektor $\overline{\underline{q}}_1$ die kleinste Spaltennorm und deren höchster Spaltenvektor $\overline{\underline{q}}_{N_t}$ die größte Spaltennorm aufweist. Somit ist gewährleistet, dass nach der $Q \cdot R$-Zerlegung die Diagonalelemente $\overline{R}_{k,k}$ der erweiterten Dreiecksmatrix $\overline{R}$ in den höchsten Zeilen $k=N_t, N_t$-1,... die höchsten Werte und in den niedrigsten Zeilen $k$=1,2,... die niedrigsten Werte aufweisen und somit ein Sequenzschätzer nach einem derartigen sortierten QRD-M-Algorithmus Schätzwerte $\hat{s}_{Nt}, \hat{s}_{Nt}$-1,.. für die Sendesignale $s_{Nt}, s_{Nt}$ -1,.. in den höchsten Layern mit einer hohen Detektionsgüte ermittelt, die vorteilhaft zu einer geringeren Fehlerfortpflanzung bei der sukzessiven Ermittlung der Schätzwerte $\hat{s}_1, \hat{s}_2$,.. für die Sendesignale $s_1, s_2$,.. in den niedrigeren Layern führt.

Die durch die Sortierung der erweiterten orthogonalen Matrix $\overline{Q}$ bedingte Vertauschung der Reihenfolge der Schätzwerte $\hat{s}_i$ für die einzelnen Sendesignale $s_i$ im Sendesignalvektor $\underline{s}$ bei dessen algorithmischer Ermittlung muss am Ende des erfindungsgemäßen Verfahrens durch inverse Permutierung der ermittelten Schätzwerte $\hat{s}_i$ für die einzelnen Sendesignale $s_i$ im Sendesignalvektor $\underline{s}$ rückgängig gemacht werden.

Der durch die Erweiterung der Übertragungsmatrix $H$ zur erweiterten Übertragungsmatrix $\overline{H}$ resultierende Fehler in der Metrik in Höhe des Faktors $\eta \cdot \underline{s}^2$ wird durch subtraktive Erweiterung der zu minimierenden Metrik um den Faktor $\eta \cdot s^2$ kompensiert.

Anstelle eines auf der $Q \cdot R$-Zerlegung und dem M-Algorithmus basierenden QRD-M-Algorithmus kann alternativ auch jede andere Kombination einer $Q \cdot R$-Zerlegung mit einem deep-first- oder breadth-first-Detektions-Algorithmus im Trellis- oder Baum-Diagramm - beispielsweise einem T-Algorithmus oder einem List-Algorithmus - zum Einsatz kommen.

Im Folgenden werden ein Ausführungsbeispiel des erfindungsgemäßen Verfahrens und der erfindungsgemäßen Vorrichtung zur Detektion von Sendesignalen in einer Multi-Layer-Übertragung anhand der Zeichnung im Detail erläutert. Die Figuren der Zeichnung zeigen:

Fig. 1   eine Baumstruktur eines QRD-M-Detektors mit $N_t$ =3, $N_r$ =3 , $M$=4 und $|S|$=4,

Fig. 2   ein Vektordiagramm zur Orthogonalisierung zweier Vektoren,

Fig. 3   ein Flussdiagramm des erfindungsgemäßen Verfahrens zur Detektion von Sendesignalen in einer Multi-Layer-Übertragung,

Fig. 4   ein Flussdiagramm der erfindungsgemäßen sortierten $QR$-Zerlegung der erweiterten Übertragungsmatrix $\overline{H}$

Fig. 5   ein Blockdiagramm der erfindungsgemäßen Vorrichtung zur Detektion von Sendesignalen in einer Multi-Layer-Übertragung,

Fig. 6   ein Diagramm von Pfadmetrik-Unterschieden unterschiedlicher Überlebenspfade in Abhängigkeit des Faktors

$\sqrt{\eta}$ ,

Fig. 7   ein Diagramm der Bitfehlerrate in Abhängigkeit des Faktors $\sqrt{\eta}$ für verschiedene Detektions-Algorithmen und

Fig. 8   ein Diagramm der Bitfehlerrate in Abhängigkeit des Signal-Rausch-Verhältnisses für verschiedene Detektions-Algorithmen.

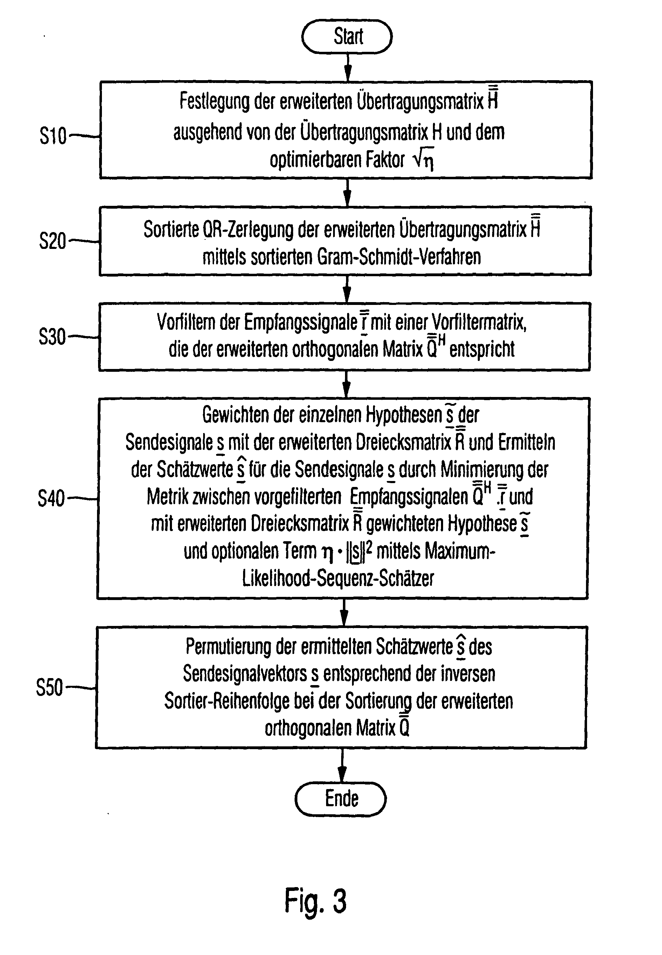

Bevor das erfindungsgemäße Verfahren und die erfindungsgemäße Vorrichtung zur Detektion von Sendesignalen in einer Multi-Layer-Übertragung anhand der Figuren 3 bis 5 beschrieben wird, werden die für das Verständnis der Erfindung erforderlichen Grundlagen im Folgenden hergeleitet:

In Anlehnung an die zeitliche Entzerrung mithilfe des Maximum-Likelihood-Sequence-Estimators (MLSE) ermittelt der räumliche Entzerrer nach dem MLSE-Verfahren gemäß Gleichung (1) die euklidische Distanz zwischen dem Vektor der Empfangssignale $\underline{r}(i)$ zum aktuellen Zeitpunkt $i$ und dem mit der Übertragungsmatrix $H$ gewichteten Vektor aller möglichen Hypothesen $\underline{\tilde{s}}$ der Sendesignale $\underline{s}$.

$$\underline{s} = \arg\left\{\min_{\underline{\tilde{s}} \in S} \| \underline{r}(i) - H \cdot \underline{\tilde{s}} \|^2\right\} \qquad (1)$$

Ein für die Praxis geeignetes räumliches Entzerrungsverfahren basiert gemäß Gleichung (2) auf der $Q \cdot R$-Zerlegung der Übertragungsmatrix $H$, bei der der durch die Spaltenvektoren $\underline{h}_i$ der $N_r \cdot N_t$-dimensionalen Übertragungsmatrix $H$ festgelegte $N_t$-dimensionale Vektorraum in einen korrespondierenden, durch die zueinander orthogonalen und normierten - orthonormierten - Vektoren $\underline{q}_i$ einer orthonormierten und unitären $N_r \cdot N_t$-dimensionalen Matrix $Q$ festgelegten orthonormierten Vektorraum und die durch die Spaltenvektoren $\underline{r}_i$ einer $N_t \cdot N_t$-dimensionalen Dreiecksmatrix $R$ festgelegten Projektionen der Spaltenvektoren $\underline{h}_i$ der Übertragungsmatrix $H$ auf den orthonormierten Vektorraum zerlegt wird.

$$H = \begin{bmatrix} \underline{h}_1 & .. & \underline{h}_i & .. & \underline{h}_{N_t} \end{bmatrix} = Q \cdot R =$$
$$= \begin{bmatrix} \underline{q}_1 & .. & \underline{q}_i & .. & \underline{q}_{N_t} \end{bmatrix} \cdot \begin{bmatrix} \underline{r}_1 & .. & \underline{r}_i & .. & \underline{r}_{N_t} \end{bmatrix} \qquad (2)$$

Bei der Dreiecksmatrix $R$ handelt es sich gemäß Gleichung (3) um eine obere Dreiecksmatrix.

$$R = \begin{bmatrix} \underline{r}_1 & .. & \underline{r}_i & .. & \underline{r}_{N_t} \end{bmatrix} = \begin{bmatrix} R_{1,1} & R_{1,2} & .. & R_{1,N_t} \\ 0 & R_{2,2} & .. & R_{2,N_t} \\ \vdots & \vdots & \vdots & R_{N_t-1,N_t} \\ 0 & 0 & 0 & R_{N_t,N_t} \end{bmatrix} \qquad (3)$$

Bei den folgenden Betrachtungen wird von einem Systemmodell des Mehrantennen-Übertragungssystems gemäß Gleichung (4) ausgegangen, das ein Multiple-Input-Multiple-Ouput-(MIMO-)System mit $N_t$ Sendeantennen und $N_r$ Empfangsantennen darstellt, in dem ein $N_t$-dimensionaler Sendesignalvektor $\underline{s}$, dessen mittlere Signalleistung $E\{\underline{s}\cdot\underline{s}^H\}$ gemäß Gleichung (5) auf den maximalen Wert normiert ist, mit einer $N_r\cdot N_t$-dimensionalen Übertragungsmatrix H gewichtet, die sich gemäß Gleichung (6) aus unkorrelierten, komplex Gauss-verteilten Übertragungsfaktoren $H_{i,j}$ mit Varianz eins zusammensetzt, und mit einem $N_r$-dimensionalen Rauschvektor $\underline{n}$ addiert, der gemäß Gleichung (7) ein komplexes, Gauss'sches additives Rauschen mit Varianz $\sigma_n^2$ beinhaltet, so dass sich ein $N_r$-dimensionaler Empfangsvektor $\underline{r}$ ergibt.

$$\underline{r} = H \cdot \underline{s} + \underline{n} \qquad (4)$$

$$E\left\{\underline{s}\cdot\underline{s}^H\right\} = \frac{1}{N_t}\cdot I_{N_t} \qquad (5)$$

$$E\left\{H\cdot H^H\right\} = I_{N_r} \qquad (6)$$

$$E\left\{\underline{n}\cdot\underline{n}^H\right\} = \sigma_n^2 \cdot I_{N_t} \qquad (7)$$

Wird das Systemmodell des Mehrantennen-Übertragungssystems gemäß Gleichung (4) beidseitig mit der hermitschen orthonormierten Matrix $Q^H$ multipliziert, so ergibt sich ein Gleichungssystem (8), das in einem Maximum-Likelihood-Ansatz unter Minimierung des Rauschvektors $\underline{n}$ in eine Metrik $M(\tilde{s})$ entsprechend Gleichung (1) eingefügt werden kann, deren Minimierung gemäß Gleichung (9) zu Schätzwerten $\tilde{\underline{s}}$ für den Sendesignalvektor $\underline{s}$ führt.

$$\underline{y} = Q^H \cdot \underline{r} = R \cdot \underline{s} + Q^H \cdot \underline{n} \qquad (8)$$

$$\hat{\underline{s}} = \arg\left\{\min_{\tilde{s}\in S^{N_t}} M(\tilde{\underline{s}})\right\} = \arg\left\{\min_{\tilde{s}\in S^{N_t}} \|\underline{y} - R\cdot\tilde{\underline{s}}\|^2\right\} \qquad (9)$$

Aufgrund der oberen Dreiecksstruktur der Dreiecksmatrix $R$ gemäß Gleichung (3) können die einzelnen Zeilen der Metrik ohne Durchführung einer numerisch komplexen Inversion der Dreiecksmatrix $R$ vom $N_t$-ten Layer sukzessive bis zum ersten Layer minimiert werden und damit sukzessive Schätzwerte $\hat{\underline{s}}$ für die Sendesignale des Sendesignalvektors $\underline{s}$ ermittelt werden. Die Minimierung der $k$-ten Zeile der Metrik $\|y-R\cdot\tilde{s}\|^2$ aus Gleichung (9) ergibt sich somit bei Anwendung des QRD-M-Algorithmuses gemäß Gleichung (10). Hierbei wird ausgehend von einem der insgesamt M im nächst höheren Layer $k+1$ detektierten Schätzwerte bzw. Zustände $\hat{s}_{k+1}^{(\alpha)}$ mit $\alpha=1,...,M$ und dessen Pfadmetrik

$\sum_{v=k+1}^{N_t} R_{k,v} \cdot \hat{s}_v^{(\alpha)}$ sowie dessen Pfadhistorie $[\hat{s}_{k+1}^{(\alpha)} .. \hat{s}_{Nt}^{(\alpha)}]$ diejenige Hypothese bzw. derjenige Zustand $\tilde{s}_k^{(\alpha)}$ von

insgesamt $|S|^{Nt}$ möglichen Hypothesen bzw. Zuständen für das von der k -ten Sendeantenne abgestrahlte Sendesignal $s_k$ detektiert, deren Pfadmetrik, bestehend aus der Zweigmetrik $R_{k,k}\cdot\tilde{s}_k^{(\alpha)}$ und der Pfadmetrik $\sum_{v=k+1}^{N_t} R_{k,v}\cdot\hat{s}_v^{(\alpha)}$ des Vorgängerzustandes $\hat{s}_{k+1}^{(\alpha)}$, eines der insgesamt $M$ minimalen Pfadmetriken im Layer $k$ ist und damit einen der insgesamt $M$ Überlebenspfade darstellt.

$$\hat{s}_k = \arg\left\{\min_{\tilde{s}_k \in S^{N_t}} | y_k - R_{k,k}\cdot\tilde{s}_k^{(\alpha)} - \sum_{v=k+1}^{N_t} R_{k,v}\cdot\hat{s}_v^{(\alpha)} |^2\right\} \qquad (10)$$

Beim QRD-M-Algorithmus werden im zuerst betrachteten Layer $N_t$ insgesamt $|S|$ Pfadmetriken und in allen weiteren $N_t$-1 Layern jeweils $M\cdot|S|$ Pfadmetriken berechnet. Die Gesamtanzahl der zu berechnenden Pfadmetriken reduziert sich somit von $|S|^{Nt}$ beim Viterbi-Algorithmus auf insgesamt $(N_t$-1$)\cdot M\cdot|S|$+$|S|$ zu berechnende Pfadmetriken beim QRD-M-Algorithmus.

Für die Entwicklung des sortierten QRD-M-Algorithmus ist das modifizierte Gram-Schmidt-Verfahren zur $Q\cdot R$-Zerlegung der Übertragungsmatrix $H$ heranzuziehen. Nach dem modifizierten Gram-Schmidt-Verfahren werden die Zeilen der Dreiecksmatrix $R$ von der ersten Zeile bis zur $N_t$-ten Zeile und die orthogonale Matrix $Q$ spaltenweise von der linksseitigen bis zur rechtsseitigen Spalte berechnet. Im ersten Schritt des modifizierten Gram-Schmidt-Verfahren wird die orthogonale Matrix $Q$ gemäß Gleichung (11) mit den Elementen der Übertragungsmatrix $H$ initialisiert.

$$Q = H = \begin{bmatrix} \underline{h}_1 & .. & \underline{h}_{N_t} \end{bmatrix} \qquad (11)$$

Für jeden der Schritte $i$=1,..,$N_t$ werden die folgenden Operationen durchgeführt:

Die Diagonalelemente $R_{i,i}$ der Dreiecksmatrix $R$ werden gemäß Gleichung (12) mit der Norm $\|\underline{q}_i\|$ des korrespondierenden Spaltenvektors $\underline{q}_i$ der zu berechnenden orthogonalen Matrix $Q$ belegt und der Spaltenvektor $\underline{q}_i$ der zu berechnenden orthogonalen Matrix $Q$ wird gemäß Gleichung (13) auf den Wert eins normiert.

$$R_{i,i} = \| \underline{q}_i \| \qquad (12)$$

$$\underline{q}_i = \frac{\underline{q}_i}{R_{i,i}} \qquad (13)$$

Die einzelnen Spaltenvektoren $\underline{q}_i$ der zu berechnenden orthogonalen Matrix $Q$ werden zueinander orthogonalisiert

- wie in Fig. 2 am Beispiel eines zweidimensionalen Vektorraumes mit den Spaltenvektoren $\underline{q}_i$ und $\underline{q}_j$ gezeigt ist
- indem von allen Spaltenvektoren $\underline{q}_l$, die vom Spaltenvektor $\underline{q}_i$ rechtsseitig in der orthogonalen Matrix angeordnet sind, die Projektion $R_{i,l}$ - als Element der Dreiecksmatrix $R$ gemäß Gleichung (3) - des Spaltenvektors $\underline{q}_l$ auf den Spaltenvektor $\underline{q}_i$ gemäß Gleichung (14) berechnet wird und der vektorielle Anteil des Spaltenvektors $\underline{q}_i$ in Richtung des Spaltenvektors $\underline{q}_i$ - zum Spaltenvektor $\underline{q}_i$ parallele Anteil des Spaltenvektors $\underline{q}_l$ - gemäß Gleichung (15) vom Spaltenvektor $\underline{q}_l$ zur Gewinnung des zum Spaltenvektor orthogonalen Anteils des Spaltenvektors $\underline{q}_l$ eliminiert wird.

$$R_{i,l} = \underline{q}_i^H \cdot \underline{q}_l \quad \text{mit} \quad l = i+1,...,N_t \qquad (14)$$

$$\underline{q}_l = \underline{q}_l - R_{i,l} \cdot \underline{q}_i \qquad (15)$$

Aufbauend auf dem modifizierten Gram-Schmidt-Verfahren wird im Folgenden das sortierte Gram-Schmidt-Verfahren hergeleitet, mit dem die zueinander orthogonalen Spaltenvektoren $q_i$ der orthogonalen Matrix $Q$ derart sortiert werden, dass die Diagonalelemente $R_{i,i}$ der Dreiecksmatrix $R$ mit aufsteigenden Werten vom niedrigsten Layer 1 bis zum höchsten Layer $N_t$ angeordnet sind. Bevor die $Q \cdot R$-Zerlegung der Übertragungsmatrix $H$ gemäß der Gleichungen (11) bis (14) durchgeführt wird, erfolgt die Sortierung der Spaltenvektoren $\underline{q}_i$ von links nach rechts innerhalb der Matrix $Q$, indem bei bereits sortierten rechtsseitig gelegenen Spaltenvektoren $q_1, q_2,..., q_{i-1}$ aus den jeweils linksseitig gelegenen noch nicht sortierten Spaltenvektoren $\underline{q}_i, \underline{q}_{i+1}, ..., \underline{q}_{Nt}$ gemäß Gleichung (16) der Spaltenindex $k_i$ des Spaltenvektors $q_{ki}$ mit der kleinsten Spaltennorm ermittelt wird.

$$k_i = \arg\left\{\min_{l=i,...,N_t} \| \underline{q}_l \|^2\right\} \qquad (16)$$

Anschließend wird der Spaltenvektor $\underline{q}_{ki}$ mit der kleinsten Spaltennorm mit dem Spaltenvektor $q_i$ innerhalb der Matrix $Q$ getauscht. Dieser Vorgang wird sukzessive für alle Spaltenvektoren $q_i$ der Matrix $Q$ von $i$=1 bis $i$= $N_t$ durchgeführt. Nach der Sortierung hat der Spaltenvektor $\underline{q}_i$ gegenüber allen rechtsseitig gelegenen Spaltenvektoren $\underline{q}_{i+1},..., \underline{q}_{Nt}$ die kleinste Spaltennorm und führt damit gemäß Gleichung (12) zum kleinsten Diagonalelement $R_{i,i}$ der Dreiecksmatrix $R$ gegenüber den Diagonalelementen $R_{i+1,i+1}$, $R_{i+2,i+2}$, ..., $R_{Nt}$, $N_t$ in den jeweils höheren Layern $i$+1,$i$+2,...,$N_t$ der Dreiecksmatrix $R$ sowie zum kleinsten Signal-Rausch-Verhältnis $SNR_i$ gegenüber den Signal-Rausch-Verhältnissen $SNR_{i+1}$, $SNR_{i+2}$, ...,$SNR_{Nt}$ in den jeweils höheren Layern $i$+1,$i$+2,...,$N_t$.

Nach der Orthogonalisierung der sortierten Spaltenvektoren $\underline{q}_i$ der Matrix $Q$ weist der Spaltenvektor $\underline{q}_i$ die kleinste Länge orthogonal zu den jeweils in der orthogonalen Matrix $Q$ linksseitig gelegenen und dazu orthogonalen Spaltenvektoren $\underline{q}_1,..., \underline{q}_{Nt}$ von allen rechtsseitig zum Spaltenvektor $\underline{q}_i$ gelegenen Spaltenvektoren $\underline{q}_{i+1},...,\underline{q}_{Nt}$ auf.

Neben der Anordnung der einzelnen Diagonalelemente $R_{i,i}$ in ansteigender Wertigkeit vom niedrigsten Layer 1 bis zum höchsten Layer $N_t$ innerhalb der Dreiecksmatrix $R$ im Hinblick auf eine hohe Unterscheidbarkeit der einzelnen zu jeweils einem höheren Layer gehörigen Zweigmetriken und damit einer Minimierung von Detektionsfehlern in höheren Layern sowie einer Fehlerfortpflanzung des/der Detektionsfehler(s) in die niedrigeren Layer können die Detektionsfehler in allen Layern erfindungsgemäß durch Erhöhung der Spaltennorm $\|\underline{h}_i\|$ der Spaltenvektoren $\underline{h}_i$ der Übertragungsmatrix $H$ und damit gemäß dem modifizierten Gram-Schmidt-Verfahren oder gemäß dem sortierten Gram-Schmidt-Verfahren durch Erhöhung der Spaltennorm $\|\underline{q}_i\|$ der Spaltenvektoren $\underline{q}_i$ der orthogonalen Matrix Q und damit durch Erhöhung sämtlicher Diagonalelemente $R_{i,i}$ der Dreiecksmatrix R minimiert werden.

Hierzu wird gemäß Gleichung (17) die Übertragungsmatrix $H$ zu einer erweiterten Übertragungsmatrix $\overline{H}$ erweitert, deren Spaltenvektoren $\overline{\overline{\underline{h}}}_i$ gegenüber den Spaltenvektoren $\underline{h}_i$ verlängert sind und in jeweils einer für den jeweiligen Spaltenvektor $\overline{\overline{\underline{h}}}_i$ spezifischen Verlängerungskomponente mit einem frei wählbaren Faktor $\sqrt{\eta}$ besetzt ist.

$$\overline{\overline{H}} = \left[\overline{\overline{\underline{h}}}_1 \quad .. \quad \overline{\overline{\underline{h}}}_i \quad .. \quad \overline{\overline{\underline{h}}}_{N_t}\right] = \left[\begin{array}{c} H \\ \sqrt{\eta} \cdot I_{N_t} \end{array}\right] = \left[\begin{array}{ccccc} \underline{h}_1 & .. & \underline{h}_i & .. & \underline{h}_{N_t} \\ \sqrt{\eta} & .. & 0 & .. & 0 \\ 0 & .. & 0 & .. & 0 \\ 0 & .. & \sqrt{\eta} & .. & 0 \\ 0 & .. & 0 & .. & 0 \\ 0 & .. & 0 & .. & \sqrt{\eta} \end{array}\right] \qquad (17)$$

Zur Kompensation des durch die Erweiterung der Übertragungsmatrix $H$ zur erweiterten Übertragungsmatrix $\overline{H}$ bedingten Fehlers im Systemmodell des Mehrantennen-Übertragungssystems wird der Rauschvektor $\underline{n}$ zu einem

erweiterten Rauschvektor $\bar{\underline{n}}$ gemäß Gleichung (18) erweitert, der den negativen, mit dem Faktor $\sqrt{\eta}$ gewichteten Sendesignalvektor $\underline{s}$ in der Vektorverlängerung beinhaltet.

$$\bar{\bar{\underline{n}}} = \begin{bmatrix} \underline{n} \\ -\sqrt{\eta} \cdot \underline{s} \end{bmatrix} \tag{18}$$

Das Systemmodell des Mehrantennen-Übertragungssystems gemäß Gleichung (4) erweitert sich somit zum erweiterten Systemmodell des Mehrantennen-Übertragungssystems gemäß Gleichung (19).

$$\bar{\bar{\underline{r}}} = \begin{bmatrix} \underline{r} \\ \underline{0}_{N_t x 1} \end{bmatrix} = \bar{\bar{H}} \cdot \underline{s} + \bar{\bar{\underline{n}}} = \begin{bmatrix} H \\ \sqrt{\eta} \cdot I_{N_t} \end{bmatrix} \cdot \underline{s} + \begin{bmatrix} \underline{n} \\ -\sqrt{\eta} \cdot \underline{s} \end{bmatrix} \tag{19}$$

Die erweiterte Übertragungsmatrix $\bar{H}$ kann analog zu Gleichung (2) mittels $Q \cdot R$-Zerlegung in eine erweiterte orthogonale Matrix $\bar{Q}$ und eine erweiterte Rechtecksmatrix $\bar{R}$ zerlegt werden.
Nach dem modifizierten Gram-Schmidt-Verfahren erfolgt die Initialisierung der erweiterten Spaltenvektoren $\bar{\bar{\underline{q}}}_i$ der erweiterten Matrix $\bar{Q}$ in Anlehnung an Gleichung (11) gemäß Gleichung (20):

$$\bar{\bar{Q}} = \begin{bmatrix} \bar{\bar{\underline{q}}}_1 & \cdots & \bar{\bar{\underline{q}}}_i & \cdots & \bar{\bar{\underline{q}}}_{N_t} \end{bmatrix} = \begin{bmatrix} \underline{h}_1 & \cdots & \underline{h}_i & \cdots & \underline{h}_{N_t} \\ \sqrt{\eta} & \cdots & 0 & \cdots & 0 \\ 0 & \cdots & 0 & \cdots & 0 \\ 0 & \cdots & \sqrt{\eta} & \cdots & 0 \\ 0 & \cdots & 0 & \cdots & 0 \\ 0 & \cdots & 0 & \cdots & \sqrt{\eta} \end{bmatrix} =$$

$$= \begin{bmatrix} \underline{q}_1 & \cdots & \underline{q}_i & \cdots & \underline{q}_{N_t} \\ \sqrt{\eta} & \cdots & 0 & \cdots & 0 \\ 0 & \cdots & 0 & \cdots & 0 \\ 0 & \cdots & \sqrt{\eta} & \cdots & 0 \\ 0 & \cdots & 0 & \cdots & 0 \\ 0 & \cdots & 0 & \cdots & \sqrt{\eta} \end{bmatrix} = \begin{bmatrix} Q_1 \\ Q_2 \end{bmatrix} \tag{20}$$

mit

$$Q_1 = \begin{bmatrix} \underline{q}_1 & \cdots & \underline{q}_i & \cdots & \underline{q}_{N_t} \end{bmatrix}$$

und

$$Q_2 = \begin{bmatrix} \sqrt{\eta} & .. & 0 & .. & 0 \\ 0 & .. & 0 & .. & 0 \\ 0 & .. & \sqrt{\eta} & .. & 0 \\ 0 & .. & 0 & .. & 0 \\ 0 & .. & 0 & .. & \sqrt{\eta} \end{bmatrix}$$

In Anlehnung an Gleichung (12) des modifizierten Gram-Schmidt-Verfahrens ergeben sich die Diagonalelemente $\overline{\overline{R}}_{i,i}$ der erweiterten Dreiecksmatrix $\overline{R}$ gemäß Gleichung (21) als Spaltennorm $\|\overline{\overline{q}}_i\|$ der jeweiligen erweiterten Spaltenvektoren $\overline{\overline{q}}_i$ der erweiterten Matrix $\overline{Q}$ und sind aufgrund der Vektorerweiterung gegenüber dem korrespondierenden Spaltenvektor $q_i$ der Matrix $Q$ um den Faktor $\sqrt{\eta}$ größer als das korrespondierende Diagonalelement $R_{i,i}$ der Dreiecksmatrix $R$.

$$\overline{\overline{R}}_{i,i} = \|\overline{\overline{q}}_i\| > \|q_i\| = R_{i,i} \qquad\qquad (21)$$

Durch die Normierung der erweiterten Spaltenvektoren der erweiterten Matrix $\overline{Q}$ in Anlehnung an Gleichung (13) des modifizierten Gram-Schmidt-Verfahrens mit dem Diagonalelement $\overline{\overline{R}}_{i,i}$ der erweiterten Dreiecksmatrix $\overline{R}$, das größer als das Diagonalelement $R_{i,i}$ der Dreiecksmatrix $R$ ist, weisen die einzelnen Komponenten des erweiterten Spaltenvektoren $\overline{\overline{q}}_i$ kleinere Werte als die korrespondierenden Komponenten des Spaltenvektors $q_i$ der Matrix Q auf. Da die Nebendiagonalelemente $\overline{\overline{R}}_{i,j}$ der erweiterten Dreiecksmatrix $\overline{R}$ in Anlehnung an Gleichung (14) des modifizierten Gram-Schmidt-Verfahrens als Skalarprodukt der beiden erweiterten Spaltenvektoren $\overline{\overline{q}}_i$ und $\overline{\overline{q}}_j$ im Anschluss an ihre Normierung ermittelt werden und da zusätzlich die beiden erweiterten Spaltenvektoren $\overline{\overline{q}}_i$ und $\overline{\overline{q}}_j$ in ihren Vektorerweiterungen orthogonal zueinander sind - Besetzung der erweiterten Spaltenvektoren $\overline{\overline{q}}_i$ und $\overline{\overline{q}}_j$ mit dem Faktor $\sqrt{\eta}$ in jeweils unterschiedlichen Komponenten der Vektorerweiterung - sind die Nebendiagonalelemente $\overline{\overline{R}}_{i,j}$ der erweiterten Dreiecksmatrix $\overline{R}$ gemäß Gleichung (22) kleiner als die korrespondierenden Nebendiagonalelemente $R_{i,j}$ der Dreiecksmatrix $R$.

$$\overline{\overline{R}}_{i,j} = \overline{\overline{q}}_i^{\,H} \cdot \overline{\overline{q}}_j < q_i^{\,H} \cdot q_j = R_{i,j} \qquad\qquad (22)$$

In Anlehnung an Gleichung (15) des sortierten Gram-Schmidt-Verfahrens ändern sich die Spaltennormen

$\|\overline{\underline{q}}_i\|$ der orthogonalen Spaltenvektoren $\overline{\underline{q}}_i$ unter Berücksichtigung, dass die Nebendiagonalelemente $\overline{\overline{R}}_{i,j}$ der erweiterten Dreiecksmatrix $\overline{R}$ kleiner als die Nebendiagonalelemente $R_{i,j}$ der Dreiecksmatrix $R$ sind, nach ihrer Orthogonalisierung geringfügiger als die Spaltennormen $\| \underline{q}_i\|$ der korrespondierenden Spaltenvektoren $\underline{q}_i$. Somit ist in Anlehnung an Gleichung (12) des modifizierten Gram-Schmidt-Verfahren die Varianz $\Delta \overline{\overline{R}}_{i,i}$ der Diagonalelemente $\overline{\overline{R}}_{i,i}$ der erweiterten Dreiecksmatrix $\overline{R}$ durch den Vorgang der Orthogonalisierung geringer als bei den Diagonalelementen $R_{i,i}$ der erweiterten Dreiecksmatrix $R$, wie in Gleichung (23) dargestellt ist.

$$\Delta \overline{\overline{R}}_{i,i} = \Delta \| \overline{\overline{\underline{q}}}_i \| = \| \overline{\overline{\underline{q}}}_{iNachher} \| - \| \overline{\overline{\underline{q}}}_{iVorher} \| = \| -\overline{\overline{R}}_{i,j} \cdot \overline{\underline{q}}_j \| <$$

$$< \Delta R_{i,i} = \Delta \| \underline{q}_i \| = \| \underline{q}_{iNachher} \| - \| \underline{q}_{iVorher} \| = \| -R_{i,j} \cdot \underline{q}_j \| \qquad (23)$$

In Anlehnung an Gleichung (8) wird im Folgenden das erweiterte Systemmodell des Mehrantennen-Übertragungssystems gemäß Gleichung (19) mit der hermitschen erweiterten orthogonalen Matrix $\overline{\overline{Q}}^H$ beidseitig multipliziert, um unter Anwendung des Maximum-Likelihood-Ansatzes eine Metrik zu gewinnen, deren Minimierung in Anlehnung an Gleichung (9) Schätzwerte $\hat{\underline{s}}$ für den Sendesignalvektor $\underline{s}$ liefern.

Aufgrund der Normierung, der Orthogonalisierung und der Sortierung der Spaltenvektoren $\overline{\underline{q}}_i$ der erweiterten Matrix $\overline{Q}$ in Anlehnung an die Gleichungen (13) bis (16) entspricht die erweiterte orthogonale Matrix $\overline{Q}$ nicht mehr der vorinitialisierten erweiterten Matrix $\overline{Q}$ gemäß Gleichung (20), sondern ist gemäß Gleichung (24) durch die von den ursprünglichen Untermatrizen $Q_1$ und $Q_2$ verschiedenen Untermatrizen $Q_1$' und $Q_2$' beschrieben.

$$\overline{\overline{Q}} = \begin{bmatrix} Q_1' & Q_2' \end{bmatrix} \qquad (24)$$

Die beidseitige Multiplikation des erweiterten Systemmodells des Mehrantennen-Übertragungssystems gemäß Gleichung (19) mit der hermitschen erweiterten orthogonalen Matrix $\overline{\overline{Q}}^H$ gemäß Gleichung (24) führt auf die mathematische Beziehung in Gleichung (25):

$$\overline{\underline{y}} = \overline{\overline{Q}}^H \cdot \overline{\underline{r}} = \overline{\overline{R}} \cdot \underline{s} + \overline{\overline{Q}}^H \cdot \overline{\underline{n}} = \overline{\overline{R}} \cdot \underline{s} + Q_1'^H \cdot \underline{n} - \sqrt{\eta} \cdot Q_2'^H \cdot \underline{s} \qquad (25)$$

Die modifizierten Untermatrizen $Q_1$' und $Q_2$' sind aufgrund der Normierung, der Orthogonalisierung und der Sortierung der Spaltenvektoren $\overline{\underline{q}}_i$ der erweiterten Matrix $\overline{Q}$ keine orthogonalen Matrizen - $Q_1' \cdot Q_1'^H \neq I_{Nr}$ und $Q_2' \cdot Q_2'^H \neq I_{Nt}$ - mehr. Insofern weist der mit der erweiterten orthogonalen Matrix =H $\overline{\overline{Q}}^H$ als Vorfiltermatrix vorgefilterte Empfangssignalvektor $\overline{\underline{r}}$ in Gleichung (25) einen zusätzlichen farbigen Rauschvektor $Q_1'^H \cdot n$ mit der komplexen Gauss-Verteilung $C(0, \sigma_n^2 \cdot Q_1'^H Q_1')$ und einen zusätzlichen Offset-Term $-\sqrt{\eta} \cdot Q_2'^H \cdot \underline{s}$ nachteilig auf.

In Anlehnung an Gleichung (9) ergibt sich unter Anwendung des Maximum-Likelihood-Ansatzes - Minimierung des Rauschvektors $\underline{n}$ - somit ausgehend vom erweiterten Systemmodell des Mehrantennen-Übertragungssystems gemäß Gleichung (19) die mit einem Maximum-Likelihood-Sequence-Estimator zu minimierende Metrik $M(\tilde{s})$ gemäß Glei-

chung (26):

$$\hat{\underline{s}} = \arg\left\{\min_{\underline{\tilde{s}} \in S^{N_t}} M(\underline{\tilde{s}})\right\} = \arg\left\{\min_{\underline{\tilde{s}} \in S^{N_t}} (\|\overline{\overline{\underline{r}}} - \overline{\overline{H}} \cdot \underline{\tilde{s}}\|^2 - \|\sqrt{\eta} \cdot \underline{\tilde{s}}\|^2)\right\} \quad (26)$$

Führt man in der Metrik nach Gleichung (26) die $Q \cdot R$-Zerlegung der erweiterten Übertragungsmatrix $\overline{H}$ ein, so sind, wie in Gleichung (27) gezeigt, folgende Matrizenoperationen durchzuführen:

$$\hat{\underline{s}} = \arg\left\{\min_{\underline{\tilde{s}} \in S^{N_t}} (\|\overline{\overline{\underline{r}}} - \overline{\overline{H}} \cdot \underline{\tilde{s}}\|^2 - \eta \|\underline{\tilde{s}}\|^2)\right\} =$$

$$= \arg\left\{\min_{\underline{\tilde{s}} \in S^{N_t}} (\|\overline{\overline{\underline{r}}} - \overline{\overline{H}} \cdot \underline{\tilde{s}} + \overline{\overline{Q}}^H \cdot \overline{\overline{\underline{r}}} - \overline{\overline{Q}}^H \cdot \overline{\underline{r}} + \overline{\overline{Q}}^H \cdot \overline{\overline{H}} \cdot \underline{\tilde{s}} - \overline{\overline{Q}}^H \cdot \overline{\overline{H}} \cdot \underline{\tilde{s}}\|^2 - \eta \|\underline{\tilde{s}}\|^2)\right\}$$

$$\leq \arg\left\{\min_{\underline{\tilde{s}} \in S^{N_t}} (\|\overline{\overline{Q}}^H \cdot \overline{\overline{\underline{r}}} - \overline{\overline{Q}}^H \cdot \overline{\overline{H}} \cdot \underline{\tilde{s}}\|^2 + \|\overline{\overline{\underline{r}}} - \overline{\overline{H}} \cdot \underline{\tilde{s}} + -\overline{\overline{Q}}^H \cdot \overline{\underline{r}} + \overline{\overline{Q}}^H \cdot \overline{\overline{H}} \cdot \underline{\tilde{s}}\|^2 - \eta \|\underline{\tilde{s}}\|^2)\right\}$$

$$= \arg\left\{\min_{\underline{\tilde{s}} \in S^{N_t}} (\|\overline{\overline{\underline{y}}} - \overline{\overline{R}} \cdot \underline{\tilde{s}}\|^2 + \|\overline{\underline{r}} - \overline{\overline{Q}}^H \cdot \overline{\underline{r}} + (\overline{\overline{Q}}^H \cdot \overline{\overline{Q}} \cdot \overline{\overline{R}} - \overline{\overline{Q}} \cdot \overline{\overline{R}}) \cdot \underline{\tilde{s}}\|^2 - \eta \|\underline{\tilde{s}}\|^2)\right\}$$

$$= \arg\left\{\min_{\underline{\tilde{s}} \in S^{N_t}} (\|\overline{\overline{\underline{y}}} - \overline{\overline{R}} \cdot \underline{\tilde{s}}\|^2 + \|\overline{\underline{r}} - \overline{\overline{Q}}^H \cdot \overline{\underline{r}} + \overline{\overline{Q}}^H \cdot \overline{\overline{Q}} \cdot \overline{\overline{R}} \cdot \underline{\tilde{s}} + \overline{\overline{Q}} \cdot \overline{\overline{Q}}^H \cdot \underline{n} - \overline{\overline{Q}} \cdot \overline{\overline{Q}}^H \cdot \overline{\underline{r}}\|^2 - \eta \|\underline{\tilde{s}}\|^2)\right\}$$

$$= \arg\left\{\min_{\underline{\tilde{s}} \in S^{N_t}} (\|\overline{\overline{\underline{y}}} - \overline{\overline{R}} \cdot \underline{\tilde{s}}\|^2 + \|\overline{\underline{r}} - \overline{\overline{Q}} \cdot \overline{\overline{Q}}^H \cdot \overline{\underline{r}} - \overline{\overline{Q}}^H \cdot \overline{\underline{r}} + \overline{\overline{Q}}^H \cdot \overline{\overline{Q}} \cdot \overline{\overline{R}} \cdot \underline{\tilde{s}} + \overline{\overline{Q}}^H \cdot \overline{\overline{Q}} \cdot \underline{n}\|^2 - \eta \|\underline{\tilde{s}}\|^2)\right\}$$

$$= \arg\left\{\min_{\underline{\tilde{s}} \in S^{N_t}} (\|\overline{\overline{\underline{y}}} - \overline{\overline{R}} \cdot \underline{\tilde{s}}\|^2 + \|(I_{N_t + N_r} - \overline{\overline{Q}} \cdot \overline{\overline{Q}}^H) \cdot \overline{\underline{r}}\|^2 - \eta \|\underline{\tilde{s}}\|^2)\right\} \quad (27)$$

Für die mathematische Transformation von Zeile 4 nach Zeile 5 in Gleichung (27) wurde die Systemgleichung (8) und für die mathematische Transformation von Zeile 6 nach Zeile 7 wurde Systemgleichung (4) unter Berücksichtigung der Orthogonalität der erweiterten orthogonalen Matrix $\overline{Q}$ – $\overline{\overline{Q}} \cdot \overline{\overline{Q}}^H = I_{N_t + N_r}$ – benutzt. Die Minimierung der Metrik

$\|\overline{\overline{\underline{y}}} - \overline{\overline{R}} \cdot \underline{\tilde{s}}\|^2 + \|(I_{N_t + N_r} - \overline{\overline{Q}} \cdot \overline{\overline{Q}}^H) \cdot \overline{\underline{r}}\|^2 - \eta \|\underline{\tilde{s}}\|^2$ in Zeile 7 von Gleichung (27) führt gezwungenermaßen wegen des Ungleichheitszeichen in Zeile 3 von Gleichung (27) auch zur Minimierung der Metrik $\|\overline{\overline{\underline{r}}} - \overline{\overline{H}} \cdot \underline{\tilde{s}}\|^2 - \eta \|\underline{\tilde{s}}\|^2$ in Zeile 1 von Gleichung (27).

Aus Gleichung (27) geht hervor, dass der Term $(I_{N_t + N_r} - \overline{\overline{Q}} \cdot \overline{\overline{Q}}^H) \cdot \overline{\overline{\underline{r}}}$ unabhängig von den Hypothesen $\underline{\tilde{s}}$ des zu schätzenden Sendesignalvektors $\underline{s}$ ist und somit bei der Metrik-Minimierung gemäß Gleichung (28) nicht zu berücksichtigen ist.

$$\hat{\underline{s}} = \arg\left\{\min_{\underline{\tilde{s}}\in S^{N_t}} M(\underline{\tilde{s}})\right\} = \arg\left\{\min_{\underline{\tilde{s}}\in S^{N_t}} (\|\underline{\overline{y}} - \overline{\overline{R}}\cdot\underline{\tilde{s}}\|^2 - \eta\,\|\underline{\tilde{s}}\|^2)\right\}$$

$$= \arg\left\{\min_{\underline{\tilde{s}}\in S^{N_t}} (\sum_{k=1}^{N_t}\left|y_k - \sum_{l=1}^{k}\overline{\overline{R}}_{k,l}\cdot\tilde{s}_l\right|^2 - \eta\cdot|\tilde{s}_k|^2)\right\} \qquad (28A)$$

Bei Vernachlässigung des Terms $\eta\cdot|\tilde{s}_k|^2$ in der Metrikminimierung ergibt sich der Schätzwert $\hat{\underline{s}}$ für den Sendesignalvektor $\underline{s}$ gemäß Gleichung (28B).

$$\hat{\underline{s}} = \arg\left\{\min_{\underline{\tilde{s}}\in S^{N_t}} M(\underline{\tilde{s}})\right\} = \arg\left\{\min_{\underline{\tilde{s}}\in S^{N_t}} \|\underline{\overline{y}} - \overline{\overline{R}}\cdot\underline{\tilde{s}}\|^2\right\}$$

$$= \arg\left\{\min_{\underline{\tilde{s}}\in S^{N_t}} \sum_{k=1}^{N_t}\left|y_k - \sum_{l=1}^{k}\overline{\overline{R}}_{k,l}\cdot\tilde{s}_l\right|^2\right\} \qquad (28B)$$

Auf der Basis dieser mathematischen Grundlagen wird im Folgenden das erfindungsgemäße Verfahren zur Detektion von Sendesignalen in einer Multi-Layer-Übertragung anhand des Flussdiagramms in Fig. 3 im Detail erläutert.

Im ersten Verfahrensschritt S10 des erfindungsgemäßen Verfahrens wird auf der Basis der Übertragungsmatrix $H$ für alle $N_t\cdot N_r$ Übertragungskanäle zwischen den $N_t$ Sendeantennen und den $N_r$ Empfangsantennen, deren Koeffizienten mit einem geeigneten Kanalschätzungsverfahren ermittelt werden, und einem frei wählbaren Faktor $\sqrt{\eta}$ die erweiterte Übertragungsmatrix $\overline{H}$ gemäß Gleichung (17) bestimmt.

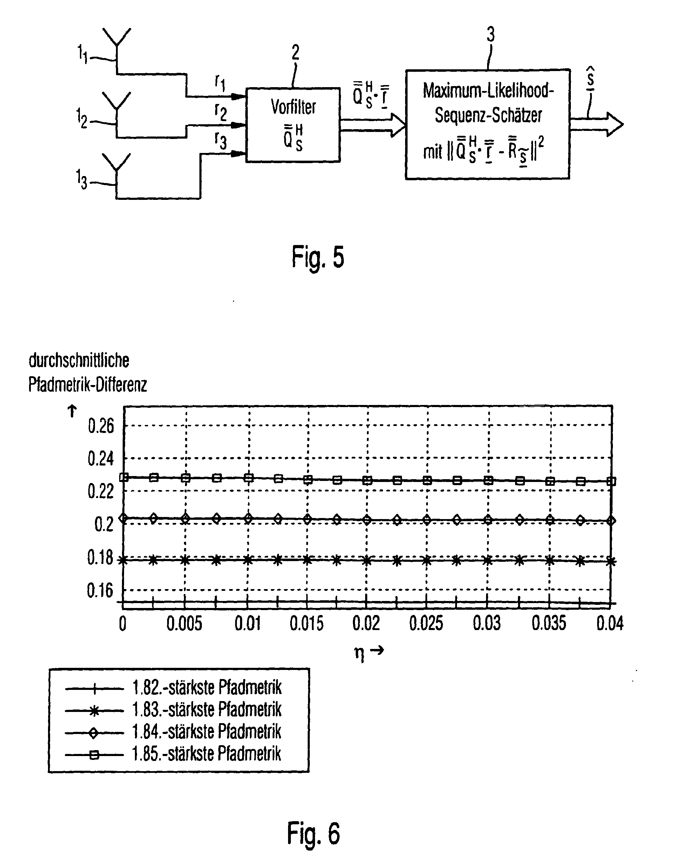

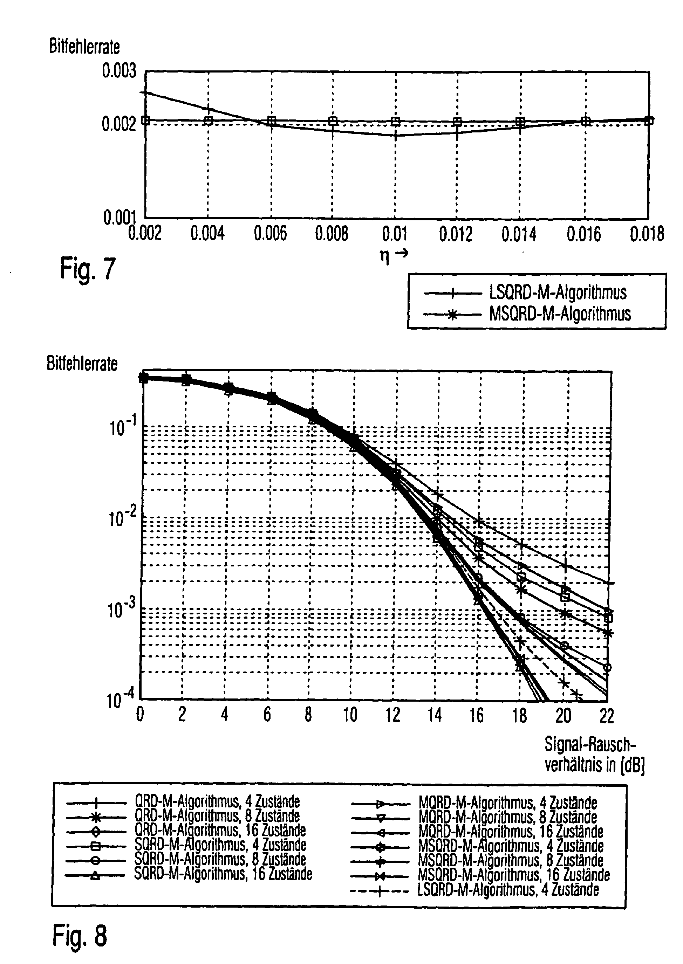

Der Faktor $\sqrt{\eta}$ ist hierzu mittels Parameterstudien im konkreten Anwendungsfall zu ermitteln. Beispielhafte Parameterstudien des Faktors $\sqrt{\eta}$ gemäß Fig. 6 haben gezeigt, dass mit steigenden Faktor $\eta$ der Unterschied zwischen der kleinsten Pfadmetrik und der zweit-, dritt-oder viert-kleinsten Pfadmetrik abnimmt, so dass mit steigenden Faktor $\eta$ die Empfindlichkeit gegenüber Rauschen und damit die Wahrscheinlichkeit für eine fehlerhafte Pfadwahl und damit eine fehlerhafte Detektion der Sendesignale $\underline{s}$ zunimmt. Wird der Faktor $\eta$ dagegen zu klein gewählt, so schwindet der Vorteil einer stärkeren Gewichtung der Diagonalelemente $\overline{\overline{R}}_{i,i}$ der erweiterten Dreiecksmatrix $\overline{R}$ gegenüber den nicht stärker gewichteten Diagonalelementen $R_{i,i}$ einer nicht erweiterten Dreiecksmatrix $R$. Aus den Parameterstudien der Fig. 7, bei der die Bitfehlerrate - Bit-Error-Rate (BER) - in Abhängigkeit des Faktors $\eta$ bei einem sortierten QRD-M-Detektor mit stärkerer Gewichtung der Diagonalelemente $\overline{\overline{R}}_{i,i}$ der erweiterten Dreiecksmatrix - $\overline{R}$ LSQRD-M-Algorithmus - im Vergleich zu einem sortierten QRD-M-Detektor mit einem nach dem Minimum-Mean-Square-Error(MMSE)-Kriterium optimierten Vorfilter - MSQRD-M-Algorithmus - ermittelt wurde, geht hervor, dass ein optimaler Wert für den Faktor $\eta$ bei 0,01 liegt.

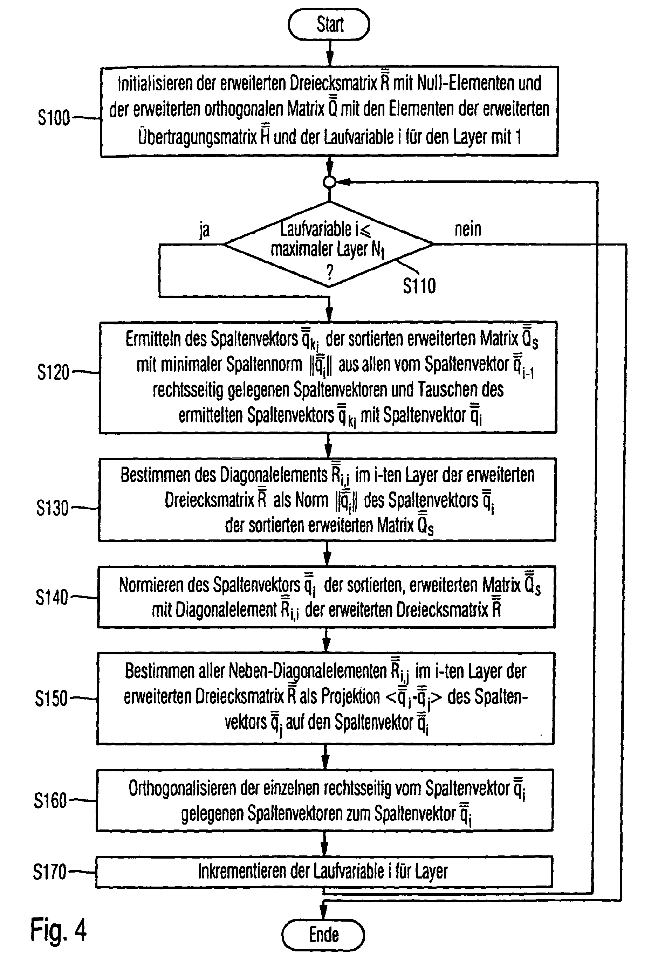

Im nächsten Verfahrensschritt S20 erfolgt die sortierte $QR$-Zerlegung der erweiterten Übertragungsmatrix $\overline{H}$ in die erweiterte orthogonale Matrix $\overline{Q}$ und in die erweiterte Dreiecksmatrix $\overline{R}$ mittels des sortierten Gram-Schmidt-Verfahren gemäß Fig. 4, das weiter unten im Detail noch beschrieben wird.

Aus der mittels sortierter $QR$-Zerlegung der erweiterten Übertragungsmatrix $\overline{H}$ in Verfahrensschritt S20 gewonnenen erweiterten orthogonalen Matrix $\overline{Q}$ wird im darauffolgenden Verfahrensschritt S30 mittels Transponieren und Konjugieren der Matrixelemente die hermitsche erweiterte orthogonale Matrix $\overline{\overline{Q}}^H$ bestimmt, die als Vorfiltermatrix zum Vorfiltern eines gemäß Gleichung (19) definierten erweiterten Empfangssignalvektor $\underline{r}$ benutzt wird.

Im nächsten Verfahrensschritt S40 erfolgt, nachdem sämtliche Hypothesen $\underline{\tilde{s}}$ des Sendesignalvektors $\underline{s}$ einerseits mit der mittels sortierter $QR$-Zerlegung der erweiterten Übertragungsmatrix $\overline{H}$ in Verfahrensschritt S20 gewonnenen

erweiterten Dreiecksmatrix $\overline{R}$ und andererseits mit dem Faktor η gewichtet wurden, die Berechnung der zugehörigen Metriken $M(\widetilde{s})$ gemäß Gleichung (28A) und die Ermittlung der jeweils minimalen Metrik, deren zugehörige Hypothese $\widetilde{s}$ den Schätzwert $\widetilde{s}$ für den zu schätzenden Sendesignalvektor $\underline{s}$ darstellt. Eine Vernachlässigung des Terms $\eta \cdot |\widetilde{s}_k|^2$ in einer zweiten Ausführungsform der erfindungsgemäßen Metrik $M(\widetilde{s})$ führt zu einer Metrikminimierung und einer Ermittlung des Schätzwerts $\hat{\underline{s}}$ für den zu schätzenden Sendesignalvektor $\underline{s}$ gemäß Gleichung (28B). In beiden Ausführungsformen der erfindungsgemäßen Metrik $M(\widetilde{s})$ kann ein konventioneller Maximum-Likelihood-Sequenz-Schätzer (MLSE) im Trellis- oder Baum-Diagramm verwendet werden, wie er nach dem Stand der Technik zur zeitlichen Entzerrung und Detektion von Symbolsequenzen zum Einsatz kommt.

Im abschließenden Verfahrensschritt S50 erfolgt schließlich eine Permutierung der ermittelten Schätzwerte $\hat{\underline{s}}$ des Sendesignalvektors $\underline{s}$ - Reihenfolgeverschiebung der einzelnen Schätzwerte $\hat{s}_i$ im Schätzwertevektor $\hat{\underline{s}}$ entsprechend der inversen Reihenfolgenverschiebung bei der Sortierung der einzelnen Spaltenvektoren $\overline{\overline{\underline{q}}}_i$ der erweiterten orthogonalen Matrix $\overline{Q}$ in der sortierten $QR$-Zerlegung in Verfahrensschritt S20.

Die in Verfahrensschritt S20 des erfindungsgemäßen Verfahrens durchzuführende erfindungsgemäße sortierte $QR$ - Zerlegung der erweiterten Übertragungsmatrix $H$ mittels sortierten Gram-Schmidt-Verfahren ist dem Flussdiagramm in Fig. 4 zu entnehmen.

Im ersten Verfahrensschritt S100 der erfindungsgemäßen sortierten $QR$ -Zerlegung der erweiterten Übertragungsmatrix $H$ erfolgt in einer Initialisierung die Vorbesetzung der erweiterten Dreiecksmatrix $\overline{R}$ mit Null-Elementen, die Vorbesetzung der erweiterten orthogonalen Matrix $\overline{Q}$ mit den Koeffizienten der erweiterten Übertragungsmatrix $H$ sowie die Vorbesetzung der Laufvariable $i$ für den zu bestimmenden Layer der Multi-Layer-Übertragung mit dem Wert eins.

Im nächsten Verfahrensschritt S110 wird ermittelt, ob alle Layer der Multi-Layer-Übertragung der $QR$ -Zerlegung bereits bearbeitet wurden, indem die Laufvariable i für den zu bestimmenden Layer mit dem Wert des höchsten Layers - $N_t$ - auf Überschreitung verglichen wird. Für den Fall, dass die Laufvariable $i$ für den zu bestimmenden Layer höher als der Wert des höchsten Layers ist und damit alle Layer in der QR-Zerlegung bereits bearbeitet wurden, ist die erfindungsgemäße sortierte $QR$ -Zerlegung der erweiterten Übertragungsmatrix $H$ beendet.

Im anderen Fall erfolgt im darauffolgenden Verfahrensschritt S120 die Sortierung der Spaltenvektoren $\overline{\overline{\underline{q}}}_i$ innerhalb der erweiterten Matrix $\overline{Q}$ in aufsteigender Spaltennorm $\|\overline{\overline{\underline{q}}}_i\|$ von der links- bis zur rechtsseitigen Spalte.

Hierzu wird für die Ermittlung des Spaltenvektors $\overline{\overline{\underline{q}}}_i$ in der i-ten Spalte der sortierten erweiterten Matrix $\overline{\overline{Q}}_S$, nachdem die Sortierung in den zur i-ten Spalte linksseitig gelegenen Spalten - Spalten 1,...,$i$-1 - bereits die Spaltenvektoren $\overline{\overline{\underline{q}}}_i$ mit den jeweils kleinsten Spaltennormen $\|\overline{\overline{\underline{q}}}_i\|$ ermittelt hatte, aus allen noch nicht sortierten, zur $i$-ten Spalte rechtsseitig gelegenen Spalten - Spalten $i$+1,...,$N_t$ - der Spaltenvektor $\overline{\overline{\underline{q}}}_{k_i}$ gemäß Gleichung (16) identifiziert, der von allen rechtsseitig gelegenen Spaltenvektoren die kleinste Spaltennorm $\|\overline{\overline{\underline{q}}}_{k_i}\|$ aufweist. Nach der Identifizierung wird der Spaltenvektor $\overline{\overline{\underline{q}}}_{k_i}$ in der $k_i$-ten Spalte mit dem Spaltenvektor $\overline{\overline{\underline{q}}}_i$ in der $i$-ten Spalte getauscht.

Im nächsten Verfahrensschritt S130 werden die Diagonalelemente $\overline{\overline{R}}_{i,i}$ der erweiterten Dreiecksmatrix $\overline{R}$ in Anlehnung an Gleichung (12) als Wert der Spaltenorm $\|\overline{\overline{\underline{q}}}_i\|$ des korrespondierenden Spaltenvektors $\overline{\overline{\underline{q}}}_i$ der sortierten erweiterten Matrix $\overline{\overline{Q}}_S$ bestimmt.

Der darauffolgende Verfahrensschritt S140 beinhaltet die Normierung der sortierten Spaltenvektoren $\overline{\overline{\underline{q}}}_i$

der sortierten erweiterten Matrix $\overline{\overline{Q}}_S$ in Anlehnung an Gleichung (13) mit dem im vorherigen Verfahrensschritt S130 ermittelten korrespondierenden Diagonalelement $\overline{\overline{R}}_{i,i}$ der erweiterten Dreiecksmatrix $\overline{R}$.

Im darauffolgenden Verfahrensschritt S150 werden sämtliche in der erweiterten Dreiecksmatrix $\overline{R}$ rechtsseitig vom Diagonalelement $\overline{\overline{R}}_{i,i}$ gelegenen Nebendiagonalelemente $\overline{\overline{R}}_{i,l}$ des i-ten Layers in Anlehnung an Gleichung (14) als Projektion des sortierten Spaltenvektors $\overline{\overline{q}}_l$ auf den sortierten Spaltenvektor $\overline{\overline{q}}_i$ mittels Bestimmung des Skalarprodukts $\underline{q}_i^{H} \cdot \underline{q}_l$ ermittelt.

Schließlich werden im nächsten Verfahrensschritt S160 sämtliche in der sortierten erweiterten Matrix $\overline{\overline{Q}}_S$ rechtsseitig vom Spaltenvektor $\overline{\overline{q}}_i$ gelegenen Spaltenvektoren $\overline{\overline{q}}_{i+1}, \ldots, \overline{\overline{q}}_{N_t}$ des i-ten Layers zum Spaltenvektor $\overline{\overline{q}}_i$ orthogonalisiert, indem in Anlehnung an Gleichung (15) der zum Spaltenvektor $\overline{\overline{q}}_i$ $q_i$ parallele Vektoranteil $R_{i,l} \underline{q}_i$ des jeweils zu orthogonalisierenden Spaltenvektors $\overline{\overline{q}}_l$ durch Subtraktion vom jeweils zu orthogonalisierenden Spaltenvektors $\overline{\overline{q}}_l$ beseitigt wird. Auf diese Weise enthält der verbleibende Spaltenvektor $\overline{\overline{q}}_l$ nur noch den zum Spaltenvektor $\overline{\overline{q}}_i$ orthogonalen Vektoranteil. Wird die Orthogonalisierung der zum jeweiligen Spaltenvektor $\overline{\overline{q}}_i$ jeweils rechtsseitig gelegenen Spaltenvektoren $\overline{\overline{q}}_l$ zum Spaltenvektor $\overline{\overline{q}}_i$ in Folge in Bezug zu allen Spaltenvektoren $\overline{\overline{q}}_i$ der sortierten erweiterten Matrix $\overline{\overline{Q}}_S$ durchgeführt, so erhält man eine sortierte erweiterte orthogonale Matrix $\overline{\overline{Q}}_S$, die einen orthogonalen $N_t + N_r$-dimensionalen Vektorraum aufspannt. Die im Verfahrensschritt S130 bestimmten Diagonalelemente $\overline{\overline{R}}_{i,i}$ und die im Verfahrensschritt S150 bestimmten Neben-Diagonalelemente $\overline{\overline{R}}_{i,j}$ der erweiterten Dreiecksmatrix $\overline{R}$ bilden die Projektionen der einzelnen Spaltenvektoren $\overline{\overline{h}}_i$ der erweiterten Übertragungsmatrix $\overline{H}$ in den durch die sortierte erweiterte orthogonale Matrix $\overline{\overline{Q}}_S$ gebildeten orthogonalen $N_t + N_r$-dimensionalen Vektorraum.

Schließlich wird im abschließenden Verfahrenschritt S170 die Laufvariable $i$ für den zu bestimmenden Layer inkrementiert und auf Verfahrensschritt S110 verzweigt, um das Diagonalelement $\overline{\overline{R}}_{i+1,i+1}$ und die Neben-Diagonalelemente $\overline{\overline{R}}_{i+1,j}$ der erweiterten Dreiecksmatrix $\overline{R}$ im nächsten Layer $i+1$ zu bestimmen, in einer Sortierung den Spaltenvektoren $\overline{\overline{q}}_{k_{i+1}}$ mit der geringsten *Spaltennorm* $\| \overline{\overline{q}}_{k_{i+1}} \|$ von allen in der erweiterten Matrix $\overline{Q}$ rechtsseitig der nächsten Spalte $i+1$ gelegenen Spaltenvektoren $\overline{\overline{q}}_i$ zu ermitteln, den nach der Sortierung in der nächsten Spalte $i+1$ gelegenen Spaltenvektor $\overline{\overline{q}}_{i+1}$ zu normieren und alle rechtsseitig der nächsten Spalte $i+1$ gelegenen Spaltenvektoren

$\overline{\overline{\underline{q}}}_{i+2}, \dots, \overline{\overline{\underline{q}}}_{N_t}$ zum Spaltenvektor $\overline{\overline{\underline{q}}}_{i+1}$ in der nächsten Spalte $i+1$ zu orthogonalisieren.

In Fig. 5 ist die erfindungsgemäße Vorrichtung zur Detektion von Sendesignalen in einer Multi-Layer-Übertragung dargestellt.

In den $N_r$=3 Empfangsantennen $I_1$, $I_2$ und $I_3$ werden die aus insgesamt $N_t$ überlagerten Sendesignalen $\underline{s}$ jeweils zusammengesetzten Empfangssignale $r_1$, $r_2$ und $r_3$ empfangen und dem Vorfilter 2 zugeführt, in dem eine Vorfilterung der *Empfangssignale* $\overline{\overline{\underline{r}}} = \begin{bmatrix} r_1 & r_2 & r_3 & \underline{0}_{N_t x1} \end{bmatrix}$ mit der sortierten = H erweiterten orthogonalen Matrix $\overline{\overline{Q}}_S^H$ als Vorfiltermatrix erfolgt.

Die vorgefilterten Empfangssignale $\overline{\overline{Q}}_S^H \cdot \overline{\overline{\underline{r}}}$ werden einem Maximum-Likelihood-Sequenz-Schätzer 3 zugeführt, der im Trellis- oder Baum-Diagramm jeweils eine Metrik $M(\tilde{s})$ aus der betragsquadrierten Differenz zwischen den vorgefilterten Empfangssignalen $\overline{\overline{Q}}_S^H \cdot \overline{\overline{\underline{r}}}$ und jeder mit der erweiterten Dreiecksmatrix $\overline{R}$ gewichteten Hypothese $\tilde{\underline{s}}$ des Sendesignalvektors $\underline{s}$ und optional abzüglich jeder mit dem Faktor $\eta$ gewichteten quadrierten Hypothese $\tilde{s}^2$ des Sendesignalvektors $\underline{s}$ berechnet und von allen somit berechneten Metriken $M(\tilde{s})$ die kleinste Metrik berechnet, deren zugehörige Hypothese $\tilde{\underline{s}}$ des Sendesignalvektors $\underline{s}$ den gesuchten Schätzwert $\hat{s}$ des Sendesignalvektors $\underline{s}$ darstellt.

In Fig. 8 ist die Bitfehlerrate - BER- in Abhängigkeit des Signal-Rausch-Verhältnisses für unterschiedliche Detektions-Algorithmen und für eine unterschiedliche Anzahl von Zuständen - 4 Zustände: beispielsweise QPSKmodulierte Übertragungssignale, 8 Zustände: beispielsweise 8-PSK-modulierte Übertragungssignale, 16 Zustände: beispielsweise 16QAM-modulierte Übertragungssignale - dargestellt. Eine reiner M-Algorithmus mit integrierter *QR*-Zerlegung - QRD-M-Algorithmus - weist die schlechtesten Detektionsergebnisse auf. Verbesserungen können mit einem M-Algorithmus mit sortierter *QR*-Zerlegung - SQRD-M-Algorithmus - erzielt werden. Ähnliche Detektionsergebnisse lassen sich mit einem M-Algorithmus mit integrierter *QR*-Zerlegung und einem nach dem Minimum-Mean-Square-Error-(MMSE-)Kriterium optimierten Vorfilter - MQRD-M-Algorithmus - realisieren. Verbesserungen lassen wiederum durch eine sortierte *QR*-Zerlegung - MSQRD-M-Algorithmus - verwirklichen. Generell führt die Sortierung in der *QR*-Zerlegung zu besseren Ergebnissen als die MMSE-Vorfilterung. Die besten Ergebnisse lassen sich mit dem erfindungsgemäßen M-Algorithmus mit sortierter *QR*-Zerlegung und stärkerer Gewichtung der Diagonalelemente $\overline{\overline{R}}_{i,i}$ der erweiterten Dreiecksmatrix $\overline{R}$ - sogenanntes Diagonal-Loading-Preconditioning (DLP) im LSQRD-M-Algorithmus - verwirklichen.

Die Erfindung ist nicht auf die dargestellten Ausführungsformen des erfindungsgemäßen Verfahrens und der erfindungsgemäßen Vorrichtung zur Detektion von Sendesignalen in einer Multi-Layer-Übertragung beschränkt. Der erfindungsgemäße Maximum-Likelihood-Sequenz-Schätzer mit stärkerer Gewichtung der Diagonalelemente $\overline{\overline{R}}_{i,i}$ der erweiterten Dreiecksmatrix $\overline{R}$ kann erfindungsgemäß auch mit einem nach dem Minimum-Mean-Square-Error-Kriterium optimierten Vorfilter kombiniert werden, in dem eine erweiterte Übertragungsmatrix $\overline{H}$ mit $\eta = \sigma_n^2$ herangezogen wird.

## Patentansprüche

1. Verfahren zur Detektion von mehreren, von jeweils einer Sendeantenne abgestrahlten Sendesignalen ($\overline{s}$) aus mehreren, in jeweils einer Empfangsantenne empfangenen Empfangssignalen ($r$) mit folgenden Verfahrensschritten:

   • (*Q·R*-) Zerlegung einer Übertragungskanalmatrix ($\overline{H}$) in eine orthogonale Matrix ($\overline{Q}^H$) und eine Dreiecksmatrix ($\overline{R}$), wobei die Übertragungskanalmatrix ($\overline{H}$) gegenüber einer Übertragungskanalmatrix ($H$) zwischen den einzelnen Sende- und den einzelnen Empfangsantennen verlängerte, mit jeweils einem Faktor ($\sqrt{\eta}$) besetzte Spaltenvektoren ($\underline{h}_l$) aufweist,

   • Ermittlung einer Metrik ($M(\tilde{s})$) aus der betragsquadrierten Differenz ($\|\overline{Q}^H \cdot \overline{\underline{r}} - \overline{R} \cdot \underline{s}\|^2$) zwischen den mit der orthogonalen Matrix ($\overline{Q}^H$) vorgefilterten Empfangssignalen ($\overline{Q}^H \cdot \underline{r}$) und den mit der Dreiecksmatrix ($\overline{R}$) gewichteten, zu den einzelnen Sendesignalen (s) jeweils gehörigen Hypothesen ($\tilde{\underline{s}}$) und

• Ermittlung von Schätzwerten ($\hat{s}$) der Sendesignale ($\underline{s}$) durch Minimierung der Metrik ($M(\tilde{s})$).

**2.** Verfahren zur Detektion nach Anspruch 1,
**dadurch gekennzeichnet,**
**dass** die Schätzung der Sendesignale ($\underline{s}$) mit einem QRD-M-Algorithmus durchgeführt wird.

**3.** Verfahren zur Detektion nach Anspruch 1 oder 2,
**dadurch gekennzeichnet,**
**dass** vor der Ermittlung der Metrik ($M(\tilde{s})$) eine sortierte orthogonale Matrix ($\overline{Q}_s$) durch Sortieren der Spaltenvektoren ($\overline{q}_i$) der orthogonalen Matrix ($\overline{Q}$) nach der Höhe ihrer Spaltennorm ($\|\overline{q}_i\|$) gebildet wird.

**4.** Verfahren zur Detektion nach Anspruch 3,
**dadurch gekennzeichnet,**
**dass** zur Sortierung der Spaltenvektoren ($\overline{q}_i$) der orthogonalen Matrix ($\overline{Q}$) ein sortiertes Gram-Schmidt-Verfahren verwendet wird.

**5.** Verfahren zur Detektion nach Anspruch 3 oder 4, **dadurch gekennzeichnet,**
**dass** die Ermittlung der Schätzwerte ($\hat{s}$) der Sendesignale ($\underline{s}$) mit einem sortierten QRD-M-Algorithmus durchgeführt wird.

**6.** Verfahren zur Detektion nach einem der Ansprüche 3 bis 5,
**dadurch gekennzeichnet,**
**dass** die aus der Sortierung der Spaltenvektoren ($\overline{q}_i$) der orthogonalen Matrix ($\overline{Q}$) in der sortierten orthogonalen Matrix ($\overline{Q}_s$) bedingte Sortierung der Schätzwerte ($\hat{s}$) der Sendesignale ($\underline{s}$) durch entsprechende inverse Permutierung der Schätzwerte ($\hat{s}$) der Sendesignale ($\underline{s}$) rückgängig gemacht wird.

**7.** Verfahren zur Detektion nach einem der Ansprüche 1 bis 6,
**dadurch gekennzeichnet,**
**dass** die Metrik ($M(\tilde{s})$) um die quadrierten, mit dem Faktor ($\eta$) multiplizierten Sendesignale ($\underline{s}$) subtraktiv erweitert wird.

**8.** Verfahren zur Detektion nach einem der Ansprüche 1 bis 7,
**dadurch gekennzeichnet,**
**dass** zur Schätzung der Sendesignale ($\underline{s}$) ein T- oder List-Algorithmus verwendet wird.

**9.** Vorrichtung zur Detektion von mehreren, von jeweils einer Sendeantenne abgestrahlten Sendesignalen ($\underline{s}$) aus mehreren, in jeweils einer Empfangsantenne empfangenen Empfangssignalen ($\underline{r}$) mit einem Vorfilter (2) zum Vorfiltern der Empfangssignale ($\overline{r}$) mit einer Vorfiltermatrix und einem nachfolgenden Sequenzschätzer (3) zum Schätzen der Sendesignale ($\underline{s}$) mittels Minimierung einer Metrik ($M$), wobei die Vorfiltermatrix eine aus einer ($Q \cdot R$-)Zerlegung einer Übertragungskanalmatrix ($H$) ermittelte orthogonale Matrix ($\overline{Q^H}$) ist,
wobei die Metrik ($M(\tilde{s})$) eine betragsquadrierte Differenz ($\|\overline{Q^H} \cdot \overline{r} - \overline{R} \cdot \tilde{s}\|^2$) zwischen den mit der orthogonalen Matrix ($\overline{Q^H}$) vorgefilterten Empfangssignalen ($\overline{Q^H \cdot r}$) und den mit einer aus der ($Q \cdot R$-)Zerlegung der Übertragungskanalmatrix ($H$) ermittelten Dreiecksmatrix ($\overline{R}$) gewichteten und zu den einzelnen Sendesignalen ($\underline{s}$) jeweils gehörigen Hypothesen ($\tilde{s}$) ist und
wobei die Übertragungskanalmatrix ($\overline{H}$) gegenüber einer Übertragungskanalmatrix ($H$) zwischen den einzelnen Sende- und den einzelnen Empfangsantennen verlängerte, mit jeweils einem Faktor ($\sqrt{\eta}$) besetzte Spaltenvektoren ($\overline{h}$) aufweist.

## Claims

**1.** Method for detection of a plurality of transmit signals ($\underline{s}$) each emitted by a transmitting antenna from a plurality of receive signals ($\underline{r}$) each received by a receiving antenna with the following method steps:

• (Q·R-)decomposition of a transmission channel matrix ($\overline{H}$) into an orthogonal matrix ($\overline{Q^H}$) and a triangular matrix ($\overline{R}$), the transmission channel matrix ($\overline{H}$) exhibiting column vectors ($\overline{h}_i$) which are each occupied with a factor ($\sqrt{\eta}$) and extended between the individual transmitting antennas and the individual receiving antennas compared with a transmission channel matrix ($H$),

• determination of a metric ($M(\tilde{s})$) from the magnitude squared difference ($\|\overline{Q^H} \cdot r{-}R{\cdot}\tilde{s}\|^2$) between the receive signals ($\overline{Q^H} \cdot r$) prefiltered with the orthogonal matrix ($\overline{Q^H}$) and the hypotheses ($\underline{\tilde{s}}$) weighted with the triangular matrix ($\overline{R}$) and associated in each case with the individual transmit signals ($\underline{s}$) and

• determination of estimated values ($\underline{\hat{s}}$) for the transmit signals ($\underline{s}$) by minimisation of the metric ($M(\tilde{s})$).

**2.** Method for detection according to claim 1, **characterised in that** the estimation of the transmit signals ($\underline{s}$) is carried out with a QRD-M-algorithm.

**3.** Method for detection according to claim 1 or 2, **characterised in that** before the determination of the metric ($M(\tilde{s})$) a sorted orthogonal matrix ($\overline{Q_s}$) is formed by sorting the column vectors ($\overline{q}_i$) of the orthogonal matrix ($\overline{Q}$) according to the height of their column norm ($\|\overline{q}_i\|$).

**4.** Method for detection according to claim 3, **characterised in that** a sorted Gram-Schmidt process is used for sorting the column vectors ($\overline{q}_i$) of the orthogonal matrix ($\overline{Q}$).

**5.** Method for detection according to claim 3 or 4, **characterised in that** the determination of the estimated values ($\underline{\hat{s}}$) for the transmit signals ($\underline{s}$) is carried out with a sorted QRD-M-algorithm.

**6.** Method for detection acccording to one of claims 3 to 5, **characterised in that** the sorting of the estimated values ($\underline{\hat{s}}$) for the transmit signals ($\underline{s}$) produced by the sorting of the column vectors ($\overline{q}_i$) of the orthogonal matrix ($\overline{Q}$) in the sorted orthogonal matrix ($\overline{Q_s}$) is reversed by corresponding inverse permutation of the estimated values ($\underline{\hat{s}}$) of the transmit signals ($\overline{s}$).

**7.** Method for detection according to one of claims 1 to 6, **characterised in that** the metric ($M(\tilde{s})$) is subtractively extended by the squared transmit signals ($\underline{s}$) multiplied by the factor (q).

**8.** Method for detection according to one of claims 1 to 7, **characterised in that** a T- or List-algorithm is used for estimating the transmit signals ($\underline{s}$).

**9.** Device for detection of a plurality of transmit signals ($\underline{s}$) each emitted by a transmitting antenna from a plurality of receive signals ($\underline{r}$) each received by a receiving antenna with a prefilter (2) for prefiltering the receive signals ($\underline{r}$) with a prefilter matrix and a following sequence estimator (3) for estimating the transmit signals (s) by means of minimisation of a metric ($M$),

wherein the prefilter matrix is an orthogonal matrix ($\overline{Q^H}$) determined from a (Q·R-) decomposition of a transmission channel matrix ($\overline{H}$),

wherein the metric ($M(\tilde{s})$) is a magnitude squared difference ($\|\overline{Q^H}{\cdot}\overline{r}{-}R{\cdot}\overline{\tilde{s}}\|^2$) between the receive signals ($\overline{Q^H{\cdot}r}$) prefiltered with the orthogonal matrix ($\overline{Q^H}$) and the hypotheses ($\tilde{s}$) weighted with a triangular matrix ($\overline{R}$) determined from the (Q·R-) decomposition of the transmission channel matrix ($H$) and associated in each case with the individual transmit signals ($\underline{s}$) and

wherein the transmission channel matrix ($\overline{H}$) exhibits column vectors ($\overline{h}_i$) which are each occupied with a factor ($\sqrt{\eta}$) and extended between the individual transmitting antennas and the individual receiving antennas compared with a transmission channel matrix ($H$).

**Revendications**

**1.** Procédé de détection de plusieurs signaux d'émission ($\underline{s}$) par une antenne d'émission respective à partir de plusieurs signaux de réception ($r$) reçus dans une antenne de réception respective comportant les étapes de procédé suivantes :

• décomposition ($Q•R$) d'une matrice de canal de transmission ($\overline{H}$) dans une matrice orthogonale ($\overline{Q}^H$) et une matrice triangulaire ($\overline{R}$), dans laquelle la matrice de canal de transmission ($\overline{H}$) par rapport à une matrice de canal de transmission ($H$) présente des vecteurs de colonne ($\overline{h}_i$) occupés par un facteur respectif ($\sqrt{\eta}$) déplacés entre les différentes antennes d'émission et les différentes antennes de réception,
• détermination d'une métrique ($M(\tilde{s})$) à partir de la différence des modules au carré ($\|\overline{Q}^H \cdot \overline{r} - \overline{R} \cdot \tilde{s}\|^2$) entre les signaux de réception ($\overline{Q}^H \cdot r$) préfiltrés par la matrice orthogonale ($\overline{Q}^H$) et les hypothèses associées respectives ($\tilde{s}$) aux différents signaux d'émission ($s$) pondérés par la matrice triangulaire ($\overline{R}$) et
• détermination des valeurs d'évaluation ($\hat{s}$) des signaux d'émission ($s$) par minimisation de la métrique ($M(\tilde{s})$).

2. Procédé de détection selon la revendication 1, **caractérisé en ce que** l'évaluation des signaux d'émission ($s$) est effectuée avec un algorithme QRD-M.

3. Procédé de détection selon la revendication 1 ou 2, **caractérisé en ce que** avant la détermination de la métrique ($M(\tilde{s})$), une matrice orthogonale ordonnée ($\overline{Q}_s$) est formée en ordonnant les vecteurs de colonne ($\overline{q}_i$) de la matrice orthogonale

($\overline{Q}$) selon la hauteur de leur norme de colonne ($\|\overline{q}_i\|$).

4. Procédé de détection selon la revendication 3, **caractérisé en ce que** un procédé Gram-Schmidt ordonné est utilisé pour ordonner les vecteurs de colonne ($\overline{q}_i$) de la matrice orthogonale ($\overline{Q}$).

5. Procédé de détection selon la revendication 3 ou 4, **caractérisé en ce que** la détermination des valeurs d'évaluation ($\hat{s}$) des signaux d'émission ($s$) est effectuée avec un algorithme QRD-M ordonné.

6. Procédé de détection selon l'une des revendications 3 à 5, **caractérisé en ce que** l'ordre des valeurs d'évaluation ($\hat{s}$) des signaux d'émission ($s$) conditionné par l'ordre des vecteurs de colonne ($\overline{q}_i$) de la matrice orthogonale ($\overline{Q}$) dans la matrice orthogonale ordonnée ($\overline{Q}_s$) est annulé par permutation inverse correspondante des valeurs d'évaluation ($\hat{s}$) des signaux d'émission ($s$).

7. Procédé de détection selon l'une des revendications 1 à 6, **caractérisé en ce que** la métrique ($M(\tilde{s})$) est élargie, par soustraction, aux signaux d'émission ($s$) multipliés par le facteur ($\eta$) élevé au carré.

8. Procédé de détection selon l'une des revendications 1 à 7, **caractérisé en ce que** un algorithme T ou de liste est utilisé pour l'évaluation des signaux d'émission ($s$).

9. Dispositif de détection de plusieurs signaux d'émission ($s$) rayonnés par une antenne d'émission respective à partir de plusieurs signaux de réception ($r$) reçus dans une antenne de réception respective comportant un préfiltre (2) pour préfiltrer les signaux de réception ($r$) grâce à une matrice de préfiltre et un estimateur de séquences suivant (3) pour évaluer les signaux d'émission ($s$) grâce à la minimisation d'une métrique ($M$), dans lequel la matrice de préfiltre est une matrice orthogonale ($\boldsymbol{Q}^H$) déterminée à partir d'une décomposition ($Q·R$) d'une matrice de canal de transmission ($\overline{H}$),
dans lequel la métrique ($M(\tilde{s})$) est une différence des modules au carré ($\|\overline{Q}^H \cdot \overline{r} - \overline{R} \cdot \tilde{s}\|^2$) entre les signaux de réception ($\boldsymbol{Q}^H \cdot r$) préfiltrés par la matrice orthogonale ($\boldsymbol{Q}^H$) et les hypothèses ($\tilde{s}$) associées respectives aux différents signaux d'émission ($s$) et pondérés par une matrice triangulaire ($\overline{R}$) déterminée à partir de la décomposition ($Q·R$) de la matrice de canal de transmission ($\overline{H}$) et
dans lequel la matrice de canal de transmission ($\overline{H}$) par rapport à une matrice de canal de transmission ($H$) présente des vecteurs de colonne ($\overline{h}_i$) occupés par un facteur respectif ($\sqrt{}$) déplacé entre les différentes antennes d'émission et les différentes antennes de réception.

Layer:    Schätzwert:

$3(=N_t)$   $\hat{s}_3$

2   $\hat{s}_2$

1   $\hat{s}_1$

Legende:

⟶▷ : potentieller Zweig

⟶ : detektierter Zweig

② : Zustand / Hypothese

**Fig. 1**

$-\langle q_i \cdot q_1 \rangle \cdot q_i$

$q_1$

$q_1 - \langle q_i \cdot q_1 \rangle \cdot q_i$

$\langle q_i \cdot q_1 \rangle$

$q_i$

**Fig. 2**

Fig. 3

Start

S100 — Initialisieren der erweiterten Dreiecksmatrix $\overline{\overline{R}}$ mit Null-Elementen und der erweiterten orthogonalen Matrix $\overline{\overline{Q}}$ mit den Elementen der erweiterten Übertragungsmatrix $\overline{\overline{H}}$ und der Laufvariable i für den Layer mit 1

S110 — Laufvariable i ≤ maximaler Layer $N_t$ ?
ja            nein

S120 — Ermitteln des Spaltenvektors $\overline{\overline{q}}_{k_i}$ der sortierten erweiterten Matrix $\overline{\overline{Q}}_s$ mit minimaler Spaltennorm $\|\overline{\overline{q}}_i\|$ aus allen vom Spaltenvektor $\overline{\overline{q}}_{i-1}$ rechtsseitig gelegenen Spaltenvektoren und Tauschen des ermittelten Spaltenvektors $\overline{\overline{q}}_{k_i}$ mit Spaltenvektor $\overline{\overline{q}}_i$

S130 — Bestimmen des Diagonalelements $\overline{\overline{R}}_{i,i}$ im i-ten Layer der erweiterten Dreiecksmatrix $\overline{\overline{R}}$ als Norm $\|\overline{\overline{q}}_i\|$ des Spaltenvektors $\overline{\overline{q}}_i$ der sortierten erweiterten Matrix $\overline{\overline{Q}}_s$

S140 — Normieren des Spaltenvektors $\overline{\overline{q}}_i$ der sortierten, erweiterten Matrix $\overline{\overline{Q}}_s$ mit Diagonalelement $\overline{\overline{R}}_{i,i}$ der erweiterten Dreiecksmatrix $\overline{\overline{R}}$

S150 — Bestimmen aller Neben-Diagonalelementen $\overline{\overline{R}}_{i,j}$ im i-ten Layer der erweiterten Dreiecksmatrix $\overline{\overline{R}}$ als Projektion $<\overline{\overline{q}}_i \cdot \overline{\overline{q}}_j>$ des Spaltenvektors $\overline{\overline{q}}_j$ auf den Spaltenvektor $\overline{\overline{q}}_i$

S160 — Orthogonalisieren der einzelnen rechtsseitig vom Spaltenvektor $\overline{\overline{q}}_i$ gelegenen Spaltenvektoren zum Spaltenvektor $\overline{\overline{q}}_i$

S170 — Inkrementieren der Laufvariable i für Layer

Ende

Fig. 4

Fig. 5

durchschnittliche
Pfadmetrik-Differenz

Legend:

- +  1.82.-stärkste Pfadmetrik
- *  1.83.-stärkste Pfadmetrik
- ◇  1.84.-stärkste Pfadmetrik
- ▢  1.85.-stärkste Pfadmetrik

Fig. 6

Bitfehlerrate

Fig. 7

| | |
|---|---|
| —+— | LSQRD-M-Algorithmus |
| —*— | MSQRD-M-Algorithmus |

Bitfehlerrate

Signal-Rausch-
verhältnis in [dB]

| | | | |
|---|---|---|---|
| —+— | QRD-M-Algorithmus, 4 Zustände | —▷— | MQRD-M-Algorithmus, 4 Zustände |
| —*— | QRD-M-Algorithmus, 8 Zustände | —▽— | MQRD-M-Algorithmus, 8 Zustände |
| —◇— | QRD-M-Algorithmus, 16 Zustände | —◁— | MQRD-M-Algorithmus, 16 Zustände |
| —□— | SQRD-M-Algorithmus, 4 Zustände | —⊕— | MSQRD-M-Algorithmus, 4 Zustände |
| —○— | SQRD-M-Algorithmus, 8 Zustände | —✚— | MSQRD-M-Algorithmus, 8 Zustände |
| —△— | SQRD-M-Algorithmus, 16 Zustände | —⋈— | MSQRD-M-Algorithmus, 16 Zustände |
| | | ---+--- | LSQRD-M-Algorithmus, 4 Zustände |

Fig. 8

**IN DER BESCHREIBUNG AUFGEFÜHRTE DOKUMENTE**

**In der Beschreibung aufgeführte Patentdokumente**

- EP 1246418 A2